# EUROPEAN PATENT APPLICATION

(11) **EP 4 350 075 A1**
(43) Date of publication of application: **10.04.2024**
(21) Application number: 22809311.8
(22) Date of filing: 20.05.2022
(51) Int. Cl.: E01B 7/00, E01B 7/02, E01B 7/10, E01B 7/20, B61L 5/02, B61L 11/02

(54) **FIXED TURNOUT TRACK AND VEHICLE-MOUNTED TRACK CHANGE SYSTEM**

(30) Priority: 25.05.2021 CN 202110573483
(71) Applicant: Xiao, Zongwang, Shenzhen, Guangdong 518118 (CN)
(72) Inventor: Xiao, Zongwang, Shenzhen, Guangdong 518118 (CN)
(74) Representative: Crippa, Paolo Ernesto
(86) International application number: PCT/CN2022/094289
(87) International publication number: WO 2022/247758

(57) **Abstract**

A fixed turnout track (1) and a vehicle-mounted track change system. The fixed turnout track (1) comprises a turnout structure and a fork guide rail (11) for guiding a vehicle to pass through a fork, the fork guide rail (11) is arranged in a turnout structure, and the front part of the fork guide rail (11) projects beyond a track surface of the turnout structure. The vehicle-mounted track change system comprises the fixed turnout track (1) and a rail vehicle (2), the rail vehicle (2) is provided with a bogie (21), and the bogie (21) is provided with a track change device. When the rail vehicle (2) passes through the fork, by means of cooperation with the fork guide rail (11), the track change device guides the rail vehicle (2) to make track change to the left or to the right. The fixed turnout track (1) does not need a turnout switch, and is simple in structure, low in cost and convenient to form a rail transit network. The rail vehicle (2) of the vehicle-mounted track change system can be autonomously guided; the vehicle-mounted track change system is safe and reliable and is beneficial to popularization of novel rail transit.

## Description

### TECHNICAL FIELD

The invention relates to the technical field of double-rail railway transit, and more particularly to a fixed turnout track and a vehicle-mounted track change system.

### BACKGROUND

In the rail transit system, the traditional double-rail railway turnouts are all movable. When the rail vehicles travel through various turnout sections, a usual way is to guide the rail vehicles from one line to another by a turnout switch machine. This steering method has the following disadvantages, for example, high requirements on the reliability of the turnout switch machine, high cost, low efficiency, and single transportation service, being unable to realize comprehensive transportation, inconvenience to form a rail transportation network, rail vehicles cannot travel across lines and passengers has to transfer between lines to realize the cross-line travel, it is unable to realize the personalized station-to-station direct travel service within the whole rail transit network, it is difficult to meet the requirements of high-density traffic flow and fast steering, and it is not conducive to the popularity of the new railway transit personal rapid transit (PRT) system.

Although a variety of public schemes have proposed a vehicle-mounted track change system that does not require movable turnouts, such as in Morgantown, West Virginia, USA; Heathrow Airport in British; International Horticultural Exposition, Suncheon City, South Korea; and Chengdu Tianfu International Airport, commercial operation demonstration lines have been built, in which, only the position, shape or physical state (such as magnetic state) of the steering pulley or similar mechanisms of the rail vehicle are changed to achieve autonomous guidance of the rail vehicle and complete the track changing process from one line to another, while the rails or routes themselves are fixed. However, the various schemes that have been disclosed have not yet achieved sufficient reliability and safety due to the limitations of their basic technical principles or design structures, and thus have not been widely used in practice.

### SUMMARY

In order to improve some deficiencies in the above prior art, it is a first object of the present application to provide a fixed turnout track which does not require a turnout switch machine and which has a simple rail structure, low construction and maintenance cost, and is convenient for forming a rail transit network.

In order to improve some deficiencies in the above-mentioned prior arts, it is a second object of the present application to provide a vehicle-mounted track change system that enables the rail vehicle to autonomously steering. Such system comprises the fixed turnout track as described in the first object of the present application, the system further comprises a rail vehicle which can accomplish autonomous steering based on autonomous cooperation with the fixed turnout track, rails at the turnout do not need to be pulled by a turnout switch machine and have their positions always remaining unchanged, no power is needed, the reliability and safety are high, the requirements of rapid steering in high-density or even zero-following distance traffic flow can be met, and it is conducive to the popularity of the new railway transit personal rapid transit (PRT) system.

Technical schemes adopted by the first object of the present application are as follows:

A fixed turnout track, comprises: a turnout structure and a branch guide rail configured for guiding a rail vehicle to travel through a turnout. The turnout structure comprises main rails and branch rails. The main rails comprise a first main rail and a second main rail, and the branch rails comprise a first branch rail and a second branch rail. The second main rail and the first branch rail are fixedly intersected at the crossing, and are provided with a flangeway along an inner edge direction of the second main rail and a flangeway along an inner edge direction of the first branch rail at an intersection, respectively. The first main rail is intersected with one end of the first branch rail at the crossing and is provided with a flangeway along an inner edge direction of the first main rail at an intersection. The second main rail is intersected with one end of the second branch rail at the crossing and is provided with a flangeway along an inner edge direction of the second branch rail at an intersection. The branch guide rail is arranged in the turnout structure, a top of the branch guide rail protrudes from upper surfaces of main rails and upper surfaces of branch rails. One side of the branch guide rail is defined as a first side guide rail part, and the other side of the branch guide rail is defined as a second side guide rail part. An end of the first side guide rail part is arranged adjacent to a side of the first branch rail at an interval. A guiding direction of the first side guide rail part extends along a direction of the first main rail. An end of the second side guide rail part is arranged adjacent to a side of the second main rail at an interval. A guiding direction of a front end of the second side guide rail part extends along a direction of the second main rail, and a guiding direction of a rear end of the second side guide rail part extends along a direction of the second branch rail. In this scheme, the branch guide rail can be cooperated with the rail vehicle to replace the conventional turnout switch machine in order to guide the rail vehicle, the turnout switch machine is not required, the rail structure is simplified, the construction and maintenance cost is much lower, thus being convenient for the miniaturization of the rail system and the formation of the rail transit network.

According to the driving route plan, the first main rail is located at a left side of the main rails, the second main rail is located at a right side of the main rails. The first branch rail is located at a left side of the branch rails, and the second branch rail is located at a right side of the branch rails. In this scheme, the fixed turnout track has straight rails and right turning rails.

According to the driving route plan, the first main rail is located at a right side of the main rails, the second main rail is located at a left side of the main rails. The first branch rail is located at a right side of the branch rails, and the second branch rail is located at a left side of the branch rails. In this scheme, the fixed turnout track has straight rails and left turning rails.

Preferably, the first main rail and the first branch rail are integrated together at a bottom of the flangeway at the intersection therebetween. In this scheme, the bottom of the flangeway at the intersection is integrated together without affecting the passage of the wheels, and the first main rail and the first branch rail can be further fixed to prevent the relative displacement therebetween or movements of both the two over a long time, so as to ensure the driving safety.

Preferably, the second main rail and the second branch rail are integrated together at a bottom of the flangeway at the intersection therebetween. In this scheme, the bottom of the flangeway at the intersection is integrated together without affecting the passage of the wheels, and the second main rail and the second branch rail can be further fixed to prevent the relative displacement therebetween or movements of both the two over a long time, so as to ensure the driving safety.

Preferably, a steering pulley protection slope of the first side guide rail part is arranged next to a lower part of the first side guide rail part of the branch guide rail, a slope top of the steering pulley protection slope of the first side guide rail part is arranged close to a side of a rear end of the first side guide rail part. A steering pulley protection slope of the second side guide rail part is arranged next to a lower part of the second side guide rail part of the branch guide rail, a slope top of the steering pulley protection slope of the second side guide rail part is arranged close to a side of a rear end of the second side guide rail part. Further, the slope top of the steering pulley protection slope of the first side guide rail part protrudes from upper surfaces of adjacent rails, and the slope top of the steering pulley protection slope of the second side guide rail part protrudes from upper surfaces of adjacent rails. In this scheme, in case of sudden abnormal conditions, if the steering rod of the rail vehicle as described in the second object of the present application sags and a bottom surface of the steering rod is lower than the upper rail surfaces of the fixed turnout track, the steering rod will bump into the fixed turnout track during the advancing process of the rail vehicle, based on the arrangement of the steering pulley protection slope and the slop top of the steering pulley protection slope protruding from the upper surfaces of adjacent rails, the abnormal sagging steering rod of the rail vehicle will move upward due to the interaction force of the steering pulley protection slope, keep rising under the action of forward inertia, and finally jump over the upper rail surfaces of the fixed turnout track, thereby ensuring the driving safety.

Preferably, a front end of the branch guide rail is provided with a collision guide pulley assembly, and the collision guide pulley assembly comprises: a support shaft, a guide pulley rotatably mounted on a top of the support shaft, and a support shaft base. The support shaft base is divided into a first base region and a second base region. The first base region is fixed at a lower part of the front end of the branch guide rail, the second base region protrudes from the front end of the branch guide rail, and a lower part of the support shaft is installed at the second base region. The front end of the branch guide rail is a concave structure, which is in clearance fit with the guide pulley. In an abnormal condition that the steering rod of the rail vehicle of the second object of the present application fails to deviate to the left or right in place in advance, the steering rod of the rail vehicle will collides with the guide pulley when reaching the front end of the branch guide rail, the guide pulley will guide the steering rod to enter a corresponding side guide rail part by rolling, thereby alleviating the impact force between the steering rod of the rail vehicle and the guide pulley when reaching the front end of the branch guide rail and ensuring the driving safety.

Further, a lower part of the support shaft is arranged at a front end of the second base region of the support shaft base, that is, directly in front of the second base region, so that the guide pulley on the upper part of the support shaft can equally reduce the impact force of the steering rod of the rail vehicle in the abnormal condition that the steering rod of the rail vehicle of the second object of the present application fails to deviate to the left or right in place in advance.

Further, the support shaft base is provided with:
a micromotion spring receiving hole, in which, one end of the micromotion spring receiving hole is closed and ends at a second rear of the second base region, in which, the second rear of the second base region is close to the second side guide rail part of the branch guide rail, and the other end of the micromotion spring receiving hole is opened and an opening extends toward the lower part of the support shaft;
a support shaft micromotion spring, in which, the support shaft micromotion spring is sleeved in the micromotion spring receiving hole, one end of the support shaft micromotion spring is fixed at the closed end of the micromotion spring receiving hole, and the other end of the support shaft micromotion spring is fixed at the lower part of the support shaft;
a micromotion support swing arm shaft, in which, the micromotion support swing arm shaft is fixed at a first rear of the second base region, in which, the first rear of the second base region is close to the first side guide rail part of the branch guide rail; and
micromotion support swing arms, in which, two micromotion support swing arms are provided; one micromotion support swing arm has one end being fixed at the support shaft close to a bottom of the guide pulley, and the other end being rotatably mounted on an upper part of the micromotion support swing arm shaft; the other micromotion support swing arm has one end being fixed at the support shaft away from the bottom of the guide pulley, and the other end being rotatably mounted on a lower part of the micromotion support swing arm shaft; and the guide pulley is capable of slightly swinging around the micromotion support swing arm under an action of an external force.

In this scheme, in an abnormal condition that the steering pulley of the rail vehicle in some technical schemes of the second object of the present application fails to deviate to the left or right in place and frontally collides with the guide pulley, the guide pulley swings slightly along a first rear direction of the second base region under the driving of the micromotion support swing arm and in turn drives the guide pulley to roll, so as to alleviate the great impact caused by rolling failure of the guide pulley at the moment where the steering pulley of the rail vehicle in some technical schemes of the second object of the present application fails to deviate to the left or right in place and frontally collides with the guide pulley, whereby ensuring the driving safety.

Technical schemes adopted by the second object are as follows:
A vehicle-mounted track change system, comprising the fixed turnout track described in any one of the technical schemes adopted by the first object of the present application, and a rail vehicle. The rail vehicle travels exclusively on the fixed turnout track. The rail vehicle comprises a vehicle body and bogies, and each bogie is installed at a bottom of the vehicle body. The bogie comprises: a wheelset assembly, a frame, and a track change device. The frame is installed at the wheelset assembly, the track change device is installed at the frame, and the track change device is adapted to cooperate with the branch guide rail of the fixed turnout track to guide the rail vehicle to enter the main rails or the branch rails through the turnout. In this scheme, the rail vehicle can accomplish autonomous steering based on the guide of the autonomous cooperation between the track change device of the bogie and the branch guide rail of the fixed turnout track. Rails at the turnout do not need to be pulled by a turnout switch machine and have their positions always remaining unchanged, so that the rail vehicle can run at smaller intervals, with high safety and excellent reliability, and can meet the requirements of rapid steering in high-density or even zero-following distance traffic flow, which is beneficial for the popularity of the new rail transit personal rapid transit (PRT) system.

In a further scheme, the wheelset assembly comprises an axle and two wheels. The wheels are installed on the axle, and a forward direction of the wheels is always perpendicular to the axle. The frame comprises a first semi-frame and a second semi-frame. The first semi-frame comprises a first support column and a first steering arm, and a front end of the first steering arm is in fixed connection with the first support column. The second semi-frame comprises a second support column and a second steering arm, and a front end of the second steering arm is in fixed connection with the second support column. Both the first support column and the second support column are in lap joint with the axle. A support plate is fixed above the first support column and the second support column, and the bottom of the vehicle body is rotatably connected to the center of the support plate. The track change device comprises: a steering crossbeam, a steering part, and a power device, both ends of the steering crossbeam are respectively fixed at a rear end of the first steering arm and a rear end of the second steering arm. A first side stopper and the second side stopper are arranged on the steering crossbeam, and the first side stopper and the second side stopper are symmetrical to a center of the steering crossbeam. Apart between the first side stopper and the center of the steering crossbeam is defined as a first side moving part, and a part between the second side stopper and the center of the steering crossbeam is defined as a second side moving part. The steering part comprises a slider and a steering rod, the steering rod extends vertically downward, an upper end of the steering rod is in fixed connection with a lower part of the slider, the slider is slidably installed on the steering crossbeam and is adapted to move left and right along a length direction of the steering crossbeam within a range of the first side moving part and the second side moving part. The power device is connected with the slider. The power device is used to drive the slider to move left and right along the length direction of the steering crossbeam. A lowest point of a lower end of the steering rod is higher than upper rail surfaces of the fixed turnout track and lower than a highest surface of the branch guide rail. Before the rail vehicle reaches the branch guide rail, when the slider is located at the first side moving part in advance, the steering rod is blocked by the first side guide rail part of the branch guide rail, and cooperates with the track change device to force the rail vehicle to move forward along a main rail direction. Before the rail vehicle reaches the branch guide rail when the slider is located at the second side moving part in advance, the steering rod is blocked by the second side guide rail part of the branch guide rail, and cooperates with the track change device to force the rail vehicle to move forward along a branch rail direction. In this scheme, the track change device has simplified structure, high safety and excellent reliability, and can meet the requirements of rapid steering in high-density or even zero-following distance traffic flow.

Preferably, the wheels are installed at two ends of the axle, both the first support column and the second support column are in lap joint with the axle and close to inner sides of the corresponding wheels. In this scheme, the wheels are arranged at outside the first support column and the second support column, thus being easily to be disassembled and convenient to be maintained.

Preferably, the wheels are installed at the axle and two ends of the axle protrude from the corresponding wheels, a first auxiliary support column is arranged beside the first support column, a second auxiliary support column is arranged beside the second support column, both the first auxiliary support column and the second auxiliary support column are in lap joint with the two ends of the axle, and both the first support column and the second support column are in lap joint with the axle and are close to inner sides of the corresponding wheels. In this scheme, due to the addition of the first auxiliary support column and the second auxiliary support column, the driving stability of the vehicle is enhanced.

Preferably, the wheels are installed at the axle and two ends of the axle protrude from the corresponding wheels, and both the first support column and the second support column are in lap joint with two ends of the axle. In this scheme, the wheels are arranged inside the first support column and the second support column, which can maintain a certain stability while increasing the width of the vehicle body.

Preferably, the first steering arm is arranged directly in front of the first support column, and the second steering arm is located directly in front of the second support column. In this scheme, the first steering arm and the second steering arm can easily complete the turning with a little force when the corresponding wheels reach the turning position.

Optionally, in order to simplify the structure, the first steering arm is located right beneath the first support column, and the second steering arm is located right beneath the second support column. In this scheme, the first steering arm and the second steering arm as well as the corresponding wheels can start to receive the force at the same time and therefore realize the turning at the turning position. In order to further simplify the structure, the axle can be directly replaced by the steering crossbeam, and the wheels are installed at the steering crossbeam.

In a preferable scheme, two first steering arms are provided, front ends of the two first steering arms are fixed at an upper part and a lower part of the first support column, respectively, and rear ends of the two first steering arms are converged together. Two second steering arms are provided, front ends of the two second steering arms are fixed at an upper part and a lower part of the second support column, respectively, and rear ends of the two second steering arms are converged together. In this scheme, the two first steering arms and the two second steering arms can strengthen the fixation, thereby improving the safety of the rail vehicle when turning.

Preferably, the slider adopts a ring structure, the steering crossbeam adopts a cylindrical structure, and the slider is sleeved on the steering crossbeam. In this scheme, the slider adopts the ring structure, which can smoothly slide left and right on the corresponding region on the steering crossbeam, thereby simplifying the structure and reducing the cost.

Optionally, the slider comprises a slider body, two slider axels, and four slider pulleys, the slider body is a cuboid, the two slider axels are perpendicularly installed at two ends of the slider body, respectively, and the four slider pulleys are installed at two ends of the two slider axels, respectively, the steering crossbeam is a planar structure and defines a downward rectangular opening in a center, the slider pulleys are capable of running on two sides of the rectangular opening in the steering crossbeam. The slider adopts a structure similar to a four-wheel trolley in this specific example, which can improve the stability of the slider in the process of sliding left and right in the corresponding region on the steering crossbeam.

In another optional scheme, the slider comprises: a slider body, four slider axels, and eight slider pulleys; the slider body adopts an H-shaped structure, the four slider axels are perpendicularly installed at the four ends of the H-shaped structure of the slider body, respectively; the eight slider pulleys are respectively installed at two ends of the four slider axels, respectively; the steering crossbeam is a two-layer planar structure, the two-layer planar structure define a downward rectangular opening in a center of each layer, four slider pulleys arranged at an upper part of the H-shaped structure of the slider body are capable of running on two sides of the upper rectangular opening in the steering crossbeam; and four slider pulleys arranged at a lower part of the H-shaped structure of the slider body are capable of running on two sides of the lower rectangular opening in the steering crossbeam. In this scheme, the slider adopts the upper and lower layers similar to a four-wheel trolley conjoined structure in this specific example, which can further improve the stability of the slider in the process of sliding left and right in the corresponding area on the steering crossbeam.

Further, the steering part is provided with a stabilizing bar, and the stabilizing bar perpendicularly crosses and is fixedly arranged at a middle part of the steering rod, and is parallel to the steering crossbeam. A first stabilizing bar limiting structure is arranged beneath the rear end of the first steering arm, one end of the stabilizing bar is in slidable connection with the first stabilizing bar limiting structure. A second stabilizing bar limiting structure is arranged beneath the rear end of the second steering arm, and the other end of the stabilizing bar is in slidable connection with the second stabilizing bar limiting structure. In this scheme, the stabilizing bar can prevent jamming phenomenon during the movement of the slider driven by the steering rod caused by uneven upper and lower force.

In a still further scheme, the wheelset assembly comprises an axle and two wheels. The wheels are installed on the axle, and a forward direction of the wheels is always perpendicular to the axle. The frame comprises a first semi-frame and a second semi-frame. The first semi-frame comprises a first support column and a first steering arm, and a front end of the first steering arm is in fixed connection with the first support column. The second semi-frame comprises a second support column and a second steering arm, and a front end of the second steering arm is in fixed connection with the second support column. Both the first support column and the second support column are in lap joint with the axle. A support plate is fixed above the first support column and the second support column, and the bottom of the vehicle body is rotatably connected to the center of the support plate. The track change device comprises: a steering crossbeam, a steering part, and a power device. Two ends of the steering crossbeam are installed at a rear end of a first steering arm and a rear end of the second steering arm, respectively. A first side stopper and the second side stopper are arranged on the steering crossbeam, and the first side stopper and the second side stopper are symmetrical to a center of the steering crossbeam. A part between the first side stopper and the center of the steering crossbeam is defined as a first side moving part, and a part between the second side stopper and the center of the steering crossbeam is defined as a second side moving part; the steering part comprises a slider and a steering rod, the steering rod extends vertically downward, an upper end of the steering rod is in fixed connection with a lower part of the slider. The slider is slidably installed on the steering crossbeam and is adapted to move left and right along a length direction of the steering crossbeam within a range of the first side moving part and the second side moving part. The power device comprises a horizontal power device and a longitudinal power device. The horizontal power device is connected with the slider and used to drive the slider to move left and right along the length direction of the steering crossbeam. The longitudinal power device is connected with the steering crossbeam and used to drive the steering crossbeam to move up and down. When the two ends of the steering crossbeam move down to a lowest point, a lowest point of a lower end of the steering rod is higher than upper rail surfaces of the fixed turnout track and lower than the highest surface of the branch guide rail. Before the rail vehicle reaches the branch guide rail, the two ends of the steering crossbeam are at the lowest points of the end of the first turning arm and the end of the second turning arm. When the slider is located at the first side moving part in advance, the steering rod is blocked by the first side guide rail part of the branch guide rail, and cooperates with the track change device to force the rail vehicle to move forward along a main rail direction. When the slider is located at the second side moving part in advance, the steering rod is blocked by the second side guide rail part of the branch guide rail, and cooperates with the track change device to force the rail vehicle to move forward along a branch rail direction. When the rail vehicle is travelling on non-branched rails, the two ends of the steering crossbeam are capable of being kept at the lowest points of the first steering arm and the second steering arm, and the two ends of the steering crossbeam are capable of being moved up to a highest point as required. In this scheme, the track change device has a simple structure, high safety, and excellent reliability, and can meet the requirements of rapid steering in high-density or even zero-following distance traffic flow. In addition, when the rail vehicle is travelling on the non-branched rails, the two ends of the steering crossbeam can move up to the highest point, that is, the track change device can move up and down, so that the steering part can be prevented from colliding with raised objects such as small stones on the road in sections where a road surface is compatible with the rails.

In a scheme, the bogie further comprises a collector shoe, the fixed turnout track further comprises a conductive rail. The conductive rail is arranged inside the fixed turnout track and is parallel to the fixed turnout track, the collector shoe is arranged on the frame of the bogie and is adapted to cooperate with the conductive rail; a height of an upper surface of the conductive rail is higher than the upper rail surfaces of the fixed turnout track, the conductive rail comprises a conductive cable, and the conductive rail is disconnected at the crossing and two disconnected ends of the conductive rail are connected by the conductive cable beneath the fixed turnout track. In this scheme, the collector shoe obtains electricity via the conductive rail and supplies the electricity to the rail vehicle. In addition, the collector shoe and the conductive rail are both located relatively at the inner side of the fixed turnout track, which can save the total width between the rails and save space.

In an optional scheme, the bogie further comprises a collector shoe, the fixed turnout track further comprises a conductive rail. The conductive rail is arranged outside the fixed turnout track and is parallel to the fixed turnout track, the collector shoe is arranged on the vehicle body and is adapted to cooperate with the conductive rail; a height of an upper surface of the conductive rail is higher than the upper rail surfaces of the fixed turnout track, the conductive rail comprises a conductive cable, and the conductive rail is disconnected at the crossing and two disconnected ends of the conductive rail are connected by the conductive cable beneath the fixed turnout track. In this scheme, the collector shoe obtains electricity via the conductive rail and supplies the electricity to the rail vehicle. In addition, the collector shoe and the conductive rail are both located relatively at the outside of the fixed turnout track, which can reduce the disconnection frequency of the conductive rail at the crossing, thereby improving the continuity of power supply.

In a preferable scheme, the bogie further comprises: a first collector shoe and a second collector shoe. The fixed turnout track further comprises: a first conductive rail and a second conductive rail.

The first conductive rail is arranged at one inner side of the fixed turnout track and is parallel to the fixed turnout track, and the second conductive rail is arranged at the other inner side of the fixed turnout track and is parallel to the fixed turnout track. The first collector shoe is arranged on the frame of the bogie and is adapted to cooperate with the first conductive rail, and the second collector shoe is arranged on the frame of the bogie and is adapted to cooperate with the second conductive rail.

A height of an upper surface of the first conductive rail and a height of the second conductive rail are higher than the upper rail surfaces of the fixed turnout track. The first conductive rail comprises a first conductive cable, the first conductive rail is disconnected at the crossing and two disconnected ends of the first conductive rail are connected by the first conductive cable beneath the fixed turnout track. The second conductive rail comprises a second conductive cable, the second conductive rail is disconnected at the crossing and two disconnected ends of the second conductive rail are connected by the second conductive cable beneath the fixed turnout track. In this scheme, the first collector shoe takes electricity through the first conductive rail, and the second collector shoe takes electricity through the second conductive rail, so as to supply the electricity to the rail vehicle. In addition, the first collector shoe and the second collector shoe, as well as the first conductive rail and the second conductive rail are all located relatively inside the fixed turnout track, which can save the total width between the rails and save space.

In another optional scheme, the bogie further comprises: a first collector shoe and a second collector shoe. The fixed turnout track further comprises: a first conductive rail and a second conductive rail.

The first conductive rail is arranged at one outer side of the fixed turnout track and is parallel to the fixed turnout track, and the second conductive rail is arranged at the other outer side of the fixed turnout track and is parallel to the fixed turnout track. The first collector shoe is arranged on the vehicle body and is adapted to cooperate with the first conductive rail, and the second collector shoe is arranged on the vehicle body and is adapted to cooperate with the second conductive rail.

A height of an upper surface of the first conductive rail and a height of the second conductive rail are higher than the upper rail surfaces of the fixed turnout track. The first conductive rail comprises a first conductive cable, the first conductive rail is disconnected at the crossing and two disconnected ends of the first conductive rail are connected by the first conductive cable beneath the fixed turnout track. The second conductive rail comprises a second conductive cable, the second conductive rail is disconnected at the crossing and two disconnected ends of the second conductive rail are connected by the second conductive cable beneath the fixed turnout track. In this scheme, the first collector shoe takes electricity through the first conductive rail, and the second collector shoe takes electricity through the second conductive rail, so as to supply the electricity to the rail vehicle. In addition, the first collector shoe and the second collector shoe, as well as the first conductive rail and the second conductive rail are all located relatively outside the fixed turnout track, which can reduce the disconnection frequency of the conductive rail at the crossing, thereby improving the continuity of power supply.

Preferably, the vehicle body is a single carriage, and the bogies are arranged at a front bottom and a rear bottom of the carriage, respectively. In this scheme, the single carriage is more flexible when the passenger flow is not very large, which is conducive to the popularization of the new rail transit personal rapid transit (PRT) system.

Optionally, the vehicle body is a plurality of carriages, the plurality of carriages are hinged end to end with one another, and the bogies are arranged at a front bottom and a rear bottom of each of the plurality of carriages, respectively. In this scheme, the plurality of carriages can increase the transport capacity when the passenger flow is large, and in addition, it is easy to realize free and flexible marshaling.

Optionally, the vehicle body is a plurality of carriages, the plurality of carriages are hinged end to end with one another, and the bogies are arranged at a front bottom of a first carriage, a bottom of a hinge portion of every adjacent carriages, and a rear bottom of a last carriage, respectively. In this scheme, the plurality of carriages can increase the transport capacity when the passenger flow is large.

Further, the steering part further comprises a steering pulley, and the steering pulley is installed at a lower part of the steering rod, and a lowest point of a lower part of the steering pulley is higher than the upper rail surfaces of the fixed turnout track and lower than a highest surface of the branch guide rail. In this scheme, the steering pulley can effectively reduce the direct frictional force between the steering rod and the branch guide rail, and prevent the steering rod from suffering excessive friction damage.

In another scheme, the rail vehicle further comprises an anti-derailment device, the anti-derailment device is arranged at a bottom of the vehicle body, and the anti-derailment device is adapted to cooperate with the fixed turnout track. In this scheme, the anti-derailment device can prevent the rail vehicle from rolling over and derailing.

Specifically, the anti-derailment device comprises an inverted hanging pulley and a support flat arm, and one side of the support flat arm is provided with an inverted hanging pulley axel and faces an inner side edge of an adjacent rail of the fixed turnout track, the inverted hanging pulley is installed at the inverted hanging pulley axel, the anti-derailment device is arranged under the bogie and close to a corresponding wheel. As the anti-derailment device is arranged under the bogie and close to the corresponding wheel, the rail vehicle can be prevented from further inclination, rollover, and derailment risks, that is, if one side of the rail vehicle is inclined upward during travelling, the inverted hanging pulley on the corresponding side will press against an upper surface of the inner recess of the fixed turnout track, and the inverted hanging pulley on the corresponding side will subjected to a downward force from the upper surface of the inner recess of the fixed turnout track, thereby preventing the rail vehicle from further inclination, rollover, and derailment.

Further, each bogie of the rail vehicle is respectively provided with a pair of the anti-derailment devices.

Further, in order to prevent the side of the inverted hanging pulley from frictional damage to the inner wall of the fixed turnout track, or to reduce the frictional loss between the support flat arm and the inner wall of the fixed turnout track, or to prevent the wheels from deviating from the rail surface of the fixed turnout track, the anti-derailment device further comprises a side guide pulley, and a lower end of the support flat arm is provided with a side guide pulley axel extending downward, the side guide pulley is installed at the side guide pulley axel. The side guide pulley is capable of being in rolling fit with an inner side wall of the fixed turnout track.

Preferably, two side guide pulleys are arranged at two sides of each anti-derailment device of the bogie of the rail vehicle, respectively. The two side guide pulleys are installed at a front side and a rear side of the side guide pulley axel, respectively. In this scheme, two side guide pulleys are arranged beside each of the wheels on the left and right sides of each bogie, which can stabilize the wheels of the bogie and prevent the wheels from swinging left and right.

In another optional scheme, the rail vehicle further comprises a safety linkage mechanism, the rail vehicle comprises two bogies, and the two bogies are arranged at a front bottom and a rear bottom of the vehicle body, respectively; the safety linkage mechanism comprises a front linkage bar and a rear linkage bar, one end of the front linkage bar is in rotatable connection with the slider of the steering part of the bogie at the front bottom of the vehicle body, one end of the rear linkage bar is in rotatable connection with the slider of the steering part of the bogie at the rear bottom of the vehicle body, and the other end of the front linkage bar and the other end of the rear linkage bar overlap with each other to form a parallel and telescopic connection. A plurality of guide rods are arranged at intervals below the front linkage bar and the rear linkage bar, and a lowest point of the lower end of the guide rods is higher than upper rail surfaces of the fixed turnout track and lower than the highest surface of the branch guide rail. In this scheme, during the advancing process of the rail vehicle, if the sliders of bogies at the front and the rear of the vehicle body are not on the same side due to malfunctions, the plurality of guide rods of the safety linkage mechanism will force the slider of the bogie at the rear of the vehicle body to be at the same side as the slider of the bogie at the front of the vehicle body one by one, respectively, under the action of the corresponding guide rail part of the branch guide rail, so that the overall steering of the rail vehicle can only be performed by the slider of bogie at the front of the vehicle body. That is, no matter which one or both of the bogies at the front and the rear fails, the rail vehicle will only advance along the route determined by the slider of the bogie at the front, thereby preventing the front and rear wheelsets of the rail vehicle from disintegration along two different directions or derailment.

In another optional scheme, the rail vehicle further comprises an emergency brake assembly, and the emergency brake assembly is fixedly installed under the vehicle body. As being the emergency brake assembly, that is to say, the emergency brake assembly will be activated only in an emergency situation. Under normal circumstances, the rail vehicle uses a conventional braking assembly to complete the braking.

Further, the emergency brake assembly comprises a movable body, a brake device, a brake cylinder, a brake friction block, and a return spring, the movable body is nested within and up-down slidable inside the brake cylinder and is driven by the brake device. An upper part of the movable body is higher than an upper part of the brake cylinder. A return spring is connected between the upper part of the movable body and the upper part of the brake cylinder, and the brake friction block is fixedly arranged under the movable body. During braking, the brake friction block is driven by the brake device to move down to a rail surface of the fixed turnout track for friction braking. In case of an emergency, a braking distance of the traditional wheel braking method is longer, and the addition of the emergency brake assembly can effectively shorten the braking distance, thereby enhancing driving safety.

Preferably, the brake device adopts hydraulic braking.

Optionally, the brake device adopts air-pressure braking.

Optionally, the brake device adopts mechanical braking.

Further, the emergency brake assembly further comprises a brake friction block guard, and the brake friction block guard is fixedly installed under the brake cylinder. A lower end surface of the brake friction block guard is higher than a lower end surface of the brake friction block, and the brake friction block is movably sleeved in the brake friction block guard. Thus, when the brake friction block rubs against the rail surface of the fixed turnout track, the brake friction block will generate a backward friction force, and most of the top of the brake friction block is confined in the brake friction block guard body, thereby protecting the brake friction block from the entire backward deformation and improving the service life of the brake friction block.

In another optional scheme, the rail vehicle further comprises a hydraulic interlock mechanism. The hydraulic interlock mechanism comprises hydraulic cylinders and hydraulic pipes. Each of the hydraulic cylinders comprises a hydraulic cylinder body and a hydraulic piston, and the hydraulic piston is movably nested in the hydraulic cylinder body. The hydraulic cylinders comprise: a first front hydraulic cylinder, a second front hydraulic cylinder, a first rear hydraulic cylinder, and a second rear hydraulic cylinder. The hydraulic pipes comprise: a first hydraulic pipe and a second hydraulic cylinder pipe. The bogies are arranged at the front bottom and the rear bottom of the vehicle body of the rail vehicle, respectively. The first front hydraulic cylinder and the second front hydraulic cylinder are symmetrically installed at two ends of the steering crossbeam of the track change device at the front bottom of the vehicle body, and the first rear hydraulic cylinder and the second rear hydraulic cylinder are symmetrically installed at two ends of the steering crossbeam of the track change device at the rear bottom of the vehicle body. One end of the first hydraulic pipe is connected to a bottom of the first front hydraulic cylinder, the other end of the first hydraulic pipe is connected to a bottom of the second rear hydraulic cylinder. One end of the second hydraulic pipe is connected to a bottom of the second front hydraulic cylinder, the other end of the second hydraulic pipe is connected to a bottom of the first rear hydraulic cylinder. Two sides of the slider of the steering part of the track change device at the front bottom of the vehicle body are in fixed connection with one end of the hydraulic piston of the first front hydraulic cylinder and one end of the hydraulic piston of the second front hydraulic cylinder, respectively. Two sides of the slider of the steering part of the track change device at the rear bottom of the vehicle body are in fixed connection with one end of the hydraulic piston of the first rear hydraulic cylinder and one end of the hydraulic piston of the second rear hydraulic cylinder, respectively. In this scheme, the states of the first front hydraulic cylinder and the first rear hydraulic cylinder are always the same, the states of the second front hydraulic cylinder and the second rear hydraulic cylinder are always the same. In case of malfunctions of the power device, the sliders of bogies at the front and the rear of the vehicle body can always be kept on the same side, thereby preventing the front and rear wheelsets of the rail vehicle from disintegration along two different directions or derailment.

Preferably, each of the first front hydraulic cylinder, the second front hydraulic cylinder, the first rear hydraulic cylinder, and the second rear hydraulic cylinder is constructed to be two groups, respectively. Each of two ends of both the first hydraulic pipe and the second hydraulic pipe is provided with two ports. The two ports at one end of the first hydraulic pipe are connected to bottoms of the two groups of first front hydraulic cylinders, respectively, and the two ports at the other end of the first hydraulic pipe are connected to bottoms of the two groups of second rear hydraulic cylinders. The two ports at one end of the second hydraulic pipe are connected with bottoms of the two groups of second front hydraulic cylinders, respectively, and the two ports at the other end of the second hydraulic pipe are connected with bottoms the two groups of the first rear hydraulic cylinder, respectively. In this way, each of the first front hydraulic cylinder, the second front hydraulic cylinder, the first rear hydraulic cylinder, and the second rear hydraulic cylinder is constructed to be two groups, respectively, such that the structural stability of the hydraulic interlock mechanism and performance reliability can be enhanced.

Compared with the prior arts, the fixed turnout track and the vehicle-mounted track change system provided by the present application have the following advantages:
1. In the fixed turnout track, by arranging the branch guide rail, the steering of the rail vehicle on the rails does not require the mechanical movement and structural changes of the movable turnout on the railway. When the rail vehicle enters the fixed turnout track, the rail vehicle can independently enter the corresponding rail through the cooperation of the branch guide rail and the bogies of the rail vehicle. The structure is simple, the construction and maintenance costs are low, and it is convenient to form a rail transit network.
2. In the vehicle-mounted track change system, by providing the safety linkage mechanism and the hydraulic interlock mechanism, even if the power of the whole system is suddenly cut-off, the bogies at the front and the rear of the rail vehicle are multiply prevented from entering different routes at the turnout due to the physical structures.
3. In the fixed turnout track and the vehicle-mounted track change system of the present application, due that no movable turnout is provided on the railway, the safe distance between rail vehicles is greatly shortened, or even a zero-following distance between rail vehicles can be realized, whereby greatly improving the operation efficiency of the whole system, realizing the miniaturization of the rails and the rail vehicles, and in particular being suitable to the personal rapid transit system.
4. The fixed turnout track and the vehicle-mounted track change system has the anti-derailment device, such that rail vehicle is not easy to derail when travelling at high speed, so that the safe travelling speed of the rail vehicle can be improved, and the rail vehicle can even travel at high speed when turning or climbing up and down slopes, making the passengers have an experience of roller coaster ride.
5. Due to the simple structure, low construction and maintenance costs, and easy miniaturization, the fixed turnout track can be built on a viaduct or on an existing road surface or underground, which is convenient to realize direct service from personalized station-to-station direct travel service, or even door-to-door direct travel service, within the whole rail transit network. In addition to serving passengers, rail vehicles can also pass through special vehicles, such as rail ambulances, rail fire engines, rail police cars, unmanned express vehicles, rail trucks, and the like.

### DESCRIPTION OF THE DRAWINGS

In order to illustrate the technical schemes of embodiments of the present application more clearly, the following drawings will be briefly introduced in the embodiments, and it should be understood that the following drawings only show some embodiments of the present application, and should not be construed as a limitation on the scope, and those skilled in the art can also obtain other related drawings according to these drawings without creative work. In the accompanying drawings of rails and rail vehicles, a direction from the right to the left of the drawings is defined as the advancing direction of the rails and the advancing direction of the rail vehicle.
FIG. 1 is a top structural schematic view of a fixed turnout track (going straight and turning right) according to the present application;
FIG. 2 is a perspective structural schematic view of the fixed turnout track according to the present application;
FIG. 3 is a rear structural schematic view of the fixed turnout track according to the present application;
FIG. 4 is a top structural schematic view of a fixed turnout track (going straight and turning left) according to the present application;
FIG. 5 is a top structural schematic view of a branch guide rail (normal state) according to the present application;
FIG. 6 is an enlarged view of part A taken from FIG. 5;
FIG. 7 is a top structural schematic view of a branch guide rail (collision state) according to the present application;
FIG. 8 is an enlarged view of part A taken from FIG. 7;
FIG. 9 is a perspective structural schematic view of a branch guide rail according to the present application;
FIG. 10 is an enlarged view of part A taken from FIG. 9;
FIGS. 11A to 11E are schematic views of a frontal collision process between a steering rod of a rail vehicle and a guide pulley of a branch guide rail;
FIG. 12 is a top structural schematic view of a vehicle-mounted track change system according to the present application;
FIG. 13 is a side structural schematic view of the vehicle-mounted track change system according to the present application;
FIG. 14 is a rear structural schematic view of the vehicle-mounted track change system according to the present application;
FIG. 15 is a perspective structural schematic view of the vehicle-mounted track change system according to the present application;
FIG. 16 is a top structural schematic view of a rail vehicle according to the present application;
FIG. 17 is a side structural schematic view of the rail vehicle according to the present application;
FIG. 18 is a front structural schematic view of the rail vehicle according to the present application;
FIG. 19 is a perspective structural schematic view of the rail vehicle according to the present application;
FIG. 20 is a front structural schematic view of a bogie according to the present application;
FIG. 21 is a top structural schematic view of the bogie according to the present application;
FIG. 22 is a perspective structural schematic view of the bogie according to the present application;
FIG. 23 is a top structural schematic view of another bogie according to the present application;
FIG. 24 is a front structural schematic view of the another bogie according to the present application;
FIG. 25 is a perspective structural schematic view of the another bogie according to the present application;
FIG. 26 is a top structural schematic view of still another bogie according to the present application;
FIG. 27 is a front structural schematic view of the still another bogie according to the present application;
FIG. 28 is a perspective structural schematic view of the still another bogie according to the present application;
FIG. 29 is a perspective structural schematic view of yet another bogie according to the present application;
FIG. 30 is a perspective structural schematic view of a simplified bogie as shown in FIG. 29;
FIG. 31 is a top structural schematic view of a hydraulic cylinder of a hydraulic interlock mechanism installed on the bogie according to the present application;
FIG. 32 is a front structural schematic view of the hydraulic cylinder of the hydraulic interlock mechanism installed on the bogie according to the present application;
FIG. 33 is a perspective structural schematic view of the hydraulic cylinder of the hydraulic interlock mechanism installed on the bogie according to the present application;
FIG. 34 is a structural schematic view showing a principle of the hydraulic interlock mechanism according to the present application;
FIG. 35 is a partial perspective view of a fixed connection between a hydraulic cylinder of the hydraulic interlock mechanism and a slider according to the present application;
FIG. 36 is a perspective schematic view of a combination of a steering crossbeam and a slider according to the present application;
FIG. 37 is a perspective schematic view of another combination of a steering crossbeam and a slider according to the present application;
FIG. 38 is a perspective schematic view of still another combination of a steering crossbeam and a slider according to the present application;
FIG. 39 is a principle schematic view of a rail vehicle advancing along a branch rail direction according to the present application;
FIG. 40 is a principle schematic view of a rail vehicle advancing along a main rail direction according to the present application;
FIG. 41 is a principle schematic view of another rail vehicle advancing along a branch rail direction according to the present application;
FIG. 42 is a principle schematic view of another rail vehicle advancing along a main rail direction according to the present application;
FIG. 43 is a top structural schematic view of an arrangement of one conductive rail at a fixed turnout track according to the present application;
FIG. 44 is a side structural schematic view of the arrangement of one conductive rail at the fixed turnout track according to the present application;
FIG. 45 is a top structural schematic view of the arrangement of one conductive rail at the fixed turnout track according to the present application;
FIG. 46 is a top structural schematic view of another arrangement of one conductive rail at a fixed turnout track according to the present application;
FIG. 47 is a top structural schematic view of an arrangement of two conductive rails at a fixed turnout track according to the present application;
FIG. 48 is a top structural schematic view of still another arrangement of one conductive rail at a fixed turnout track according to the present application;
FIG. 49 is a top structural schematic view of another arrangement of two conductive rails at a fixed turnout track according to the present application;
FIG. 50A is a rear structural schematic view of cooperation between the two conductive rails shown in FIG. 49 and collector shoes on a bogie, respectively;
FIG. 50B is a rear structural schematic view of cooperation between the two conductive rails shown in FIG. 47 and collector shoes on a bogie, respectively;
FIG. 50C and FIG. 50E are rear structural schematic views of cooperation between the conductive rail shown in FIG. 43 to FIG. 45 and a collector shoe on the bogie;
FIG. 50D and FIG. 50F are rear view structural schematic views of cooperation between the conductive rail shown in FIG. 48 and the collector shoe on the bogie;
FIG. 51A is a positional and structural schematic view of a bogie when the vehicle body is a single carriage according to the present application;
FIG. S 1B is a positional and structural schematic view of bogies when the vehicle body is a plurality of carriages according to the present application;
FIG. 51C is a positional and structural schematic view of bogies when the vehicle body is a plurality of carriages in another manner according to the present application;
FIG. 52A is a front structural schematic view of an anti-derailment device in case of inclination according to the present application;
FIG. 52B is an enlarged view of part A taken from FIG. 52A;
FIG. 53 is a positional and structural schematic view of a safety linkage mechanism in a vehicle-mounted track change system according to the present application;
FIG. 54 is a bottom positional and structural schematic view of a safety linkage mechanism connected between two bogies at a front and a rear of the vehicle body according to the present application;
FIG. 55 is a lateral positional and structural schematic view of a safety linkage mechanism connected between two bogies at a front and a rear of the vehicle body according to the present application;
FIG. 56A is a structural schematic view of a process (shrinking) of a safety linkage mechanism in which the linkage bars are overlapped and can be stretched in parallel;
FIG. 56B is a structural schematic view of a process (stretching) of the safety linkage mechanism in which the linkage bars are overlapped and can be stretched in parallel;
FIG. 57 is a structural schematic view of an emergency brake assembly according to the present application before emergency braking (no friction with the rail);
FIG. 58 is a structural schematic view of the emergency brake assembly of the present application during emergency braking (friction with the rail);
FIG. 59 is a partial sectional and perspective structural schematic view of the emergency brake assembly according to the present application;
FIG. 60 is a perspective structural schematic view showing a position of a scheme of an anti-derailment device in the rail vehicle according to the present application;
FIG. 61 is a bottom structural schematic view showing a position of a scheme of an anti-derailment device in the rail vehicle according to the present application;
FIG. 62 is a rear structural schematic view showing a positional relationship between the anti-derailment device and the turnout structure in the vehicle-mounted track change system according to the present application;
FIG. 63 is an enlarged view of part A taken from FIG. 62;
FIG. 64 is a perspective structural schematic view of a preferred scheme of an anti-derailment device in the rail vehicle according to the present application;
FIG. 65 is an enlarged view of part A taken from FIG. 64;
FIG. 66 is a bottom structural schematic view of a preferred scheme of an anti-derailment device in the rail vehicle according to the present application;
FIG. 67A is a front structural schematic view of a movable steering crossbeam at a lower part of the track change device according to the present application;
FIG. 67B is a front structural schematic view of the movable steering crossbeam at an upper part of the track change device according to the present application;
FIG. 68A is a perspective structural schematic view of the movable steering crossbeam at the lower part of the track change device according to the present application; and
FIG. 68B is a perspective structural schematic view of the movable steering crossbeam at the upper part of the track change device according to the present application.

Reference numerals are explained as follows:
fixed turnout track 1,
first main rail 101, second main rail 102, first branch rail 103, second branch rail 104,
flangeway 1013, flangeway 1023, flangeway 1032, flangeway 1042,
branch guide rail 11,
first side guide rail part 111, second side guide rail part 112, steering pulley protection slope 113, collision guide pulley assembly 114, conductive rail 121, conductive rail 122, first conductive rail 123a, second conductive rail 123b, first conductive rail 124a, second conductive rail 124b,
support shaft base1141, guide pulley 1142, micromotion support swing arm 1143, support shaft micromotion spring 1144, support shaft 1145, micromotion support swing arm shaft 1146, micromotion spring receiving hole 1147,
rail vehicle 2,
bogie 21,
axel 202, wheel 201, first semi-frame 211, second semi-frame 212, steering crossbeam 213, steering part 214, support plate 215, collector shoe 215a, collector shoe 215b, first collector shoe 216a, second collector shoe 216b, first collector shoe 217a, second collector shoe 217b,
first support column 2111, first auxiliary support column2111a, second support column 2121, second auxiliary support column2121a, first steering arm 2112, first side stopper 2131, second side stopper 2132, steering rod 2142, steering pulley 2143, slider body 2141a, slider axle 2141b, slider pulley 2141c, stabilizing bar 2142a, first stabilizing bar limiting structure 2112a, second stabilizing bar limiting structure2122a,
anti-derailment device 31,
inverted hanging pulley 311, support assembly 312, side guide pulley 316,
support flat arm 31222, inverted hanging pulley axel 31223, side guide pulley axel 31225,
emergency brake assembly 32,
movable body 323, brake cylinder 322, brake friction block 324, return spring 321, inverted pulley set 325,
brake friction block guard 3221,
vehicle body 41,
hydraulic interlock mechanism 51,
hydraulic cylinder 511, hydraulic pipe 512, first front hydraulic cylinder 511a, second front hydraulic cylinder 511b, first rear hydraulic cylinder 511c, second rear hydraulic cylinder 511d, first hydraulic pipe 512a, second hydraulic pipe 512b,
hydraulic cylinder body 5111, hydraulic piston 5112,
safety linkage mechanism 6,
first linkage bar 61, and second linkage bar 62.

### DETAILED DESCRIPTION

Embodiments of the present application are described in detail below, examples of which are shown in the drawings, in which, the same or similar reference numerals designate the same or similar elements or elements having the same or similar functions throughout. The embodiments described below by referring to the figures are exemplary only for explaining the present application and should not be construed as limiting the present application. The components of the embodiments of the present application generally described and illustrated in the drawings herein can be arranged and designed in a variety of different configurations, and it will be apparent that the described embodiments are only some, not all, implementations of the present application. Accordingly, the following detailed description of the embodiments of the present application provided in the accompanying drawings is not intended to limit the scope of the claimed invention, but merely represents selected embodiments of the invention. Based on the embodiments of the present application, all other embodiments obtained by those skilled in the art without making creative efforts fall within the protection scope of the present application.

It should be understood that terms "center", "longitudinal", "horizontal", "length", "width", "upper", "lower", "front", "rear", "left", "right", "vertical", "horizontal", "top", "bottom", "inside", "outside" and the like indicating orientation or positional relationship are based on the orientation or the positional relationship shown in the drawings, and are merely for facilitating and simplifying the description of the present application, rather than indicating or implying that a device or component must have a particular orientation, or be configured or operated in a particular orientation, and thus should not be construed as limiting the application. Furthermore, features defined as "first", "second", and "third" may explicitly or implicitly include one or more of these features. In the description of the present application, unless otherwise specified, "plurality" means two or more.

In the description of the present application, it should be noted that unless otherwise specifically stipulated and defined, terms like "install", "connect", "couple", "fix" should be construed broadly, for example, they may indicate a fixed connection, a detachable connection, or an integral as a whole; may be a mechanical connection, or an electrical connection; may be in direct connection, or indirect connection via an intermediate, and may also reflect internal communication of two elements or interactions between two elements. For those skilled in the art, the specific meanings of the above terms in the present application can be understood according to specific conditions.

In order to improve some deficiencies in the above prior art, it is a first object of the present application to provide a fixed turnout track 1 that does not require a turnout switch machine, which has a simple structure and low cost, and is convenient for forming a rail transit network.

In order to improve some deficiencies in the above-mentioned prior arts, it is a second object of the present application to provide a vehicle-mounted track change system having the fixed turnout track. The system further comprises a rail vehicle 2. The system comprises the fixed turnout track 1 according to the first object of the present application. The rail vehicle can accomplish autonomous steering based on autonomous cooperation with the fixed turnout track 1, rails at the turnout do not need to be pulled by a turnout switch machine, no power is needed, the structure thereof is simple, the reliability and safety are high, the requirements of high-density traffic flow and fast steering can be met, and it is conducive to the popularity of the new railway transit personal rapid transit (PRT) system.

The fixed turnout track 1 according to the embodiment of the first object of the present application is described below with reference to the accompanying drawings.

### Example 1

Embodiments of the present application provide a fixed turnout track 1, which comprises a turnout structure and a branch guide rail 11 configured for guiding a rail vehicle to travel through a turnout. The turnout structure comprises main rails and branch rails, and those skilled in the art may easily understand that the main rails and the branch rails herein are just for the convenience of expression and have no difference in their structures.

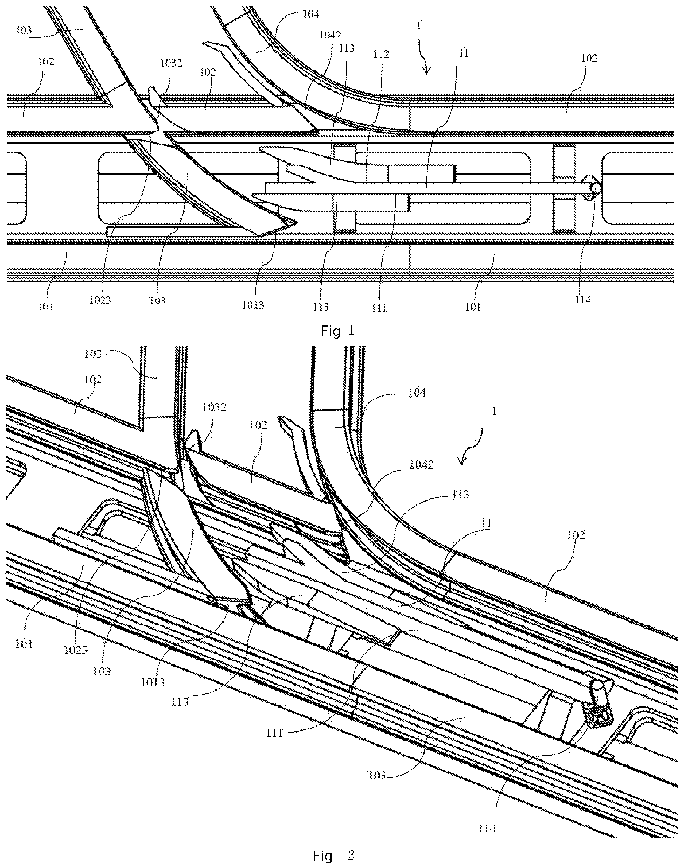

As shown in FIGS. 1-4 and FIGS. 12-15, the main rails comprise a first main rail 101 and a second main rail 102, and the branch rails comprise a first branch rail 103 and a second branch rail 104, which means that the main rails and the branch rails herein are both double rails. As shown in FIG. 1, at a turnout, the second main rail 102 and the first branch rail 103 are fixedly intersected at the crossing, and are provided with a flangeway 1023 along an inner edge direction of the second main rail 102 and a flangeway 1032 along an inner edge direction of the first branch rail 103 at an intersection, respectively. The first main rail 101 is intersected with one end of the first branch rail 103 at the crossing and is provided with a flangeway 1013 along an inner edge direction of the first main rail 101 at an intersection. The second main rail 102 is intersected with the second branch rail 104 at the crossing and is provided with a flangeway 1042 along an inner edge direction of the second branch rail 104 at an intersection. Here, a width of the flangeway is greater than that of a wheel flange of the rail vehicle 2, and an inside of the flangeway and an inside of the corresponding rail are smoothly transitioned without protrusions, so that the wheels of the rail vehicle 2 can pass through each intersection smoothly. Those skilled in the art should understand that the "first" and "second" expressions here are only for convenience of description, and should not be understood as indicating or implying relative importance.

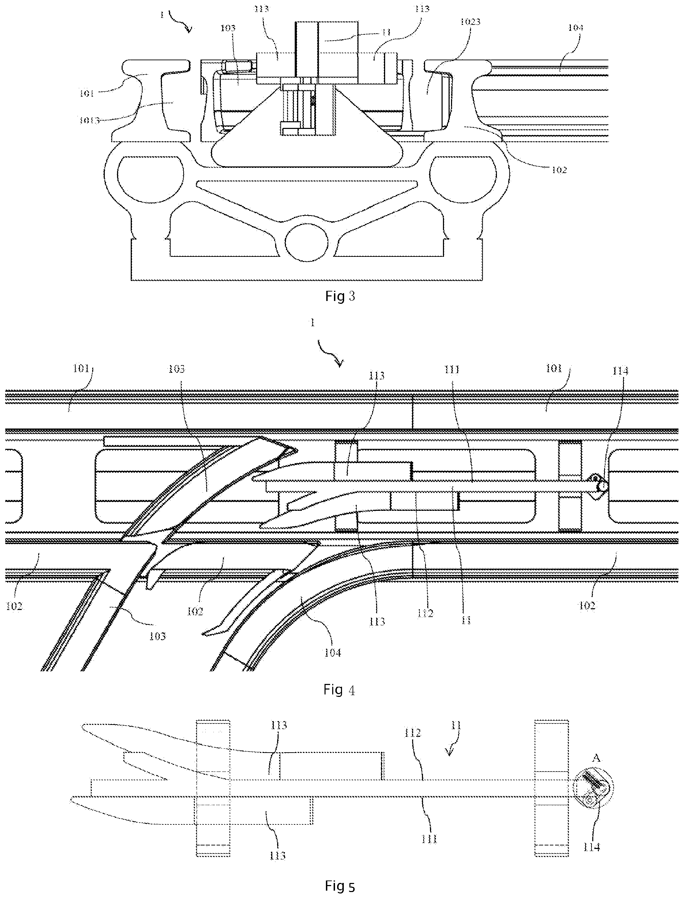

As shown in FIGS. 1-4 and FIGS. 12-15, the branch guide rail 11 is arranged in the turnout structure, in order to firmly fix positions of the branch guide rail 11 and the turnout structure for a long time, in embodiments, a bottom of the branch guide rail 11 and the bottom of the turnout structure are integrated and fixed as a whole. It can be understood that there are many ways to fix the positions of the branch guide rail 11 and the turnout structure, for example, the branch guide rail 11 and the turnout structure can also be arranged on the sleepers respectively, which will not be explicitly exemplified one by one herein. As shown in FIG. 3, a top of the branch guide rail 11 protrudes from upper surfaces of main rails and upper surfaces of branch rails. For the convenience of description, as shown in FIG. 1, FIG. 2, and FIG. 4, one side of the branch guide rail 11 is defined as a first side guide rail part 111, and the other side of the branch guide rail 11 is defined as a second side guide rail part 112. An end of the first side guide rail part 111 is arranged adjacent to a side of the first branch rail 103 at an interval. Herein, the interval is greater than the wheel flange of the rail vehicle 2, no matter for a turning route or a straight route, the end of the first side guide rail part 111 will never block the wheels of the rail vehicle 2. A guiding direction of the first side guide rail part 111 extends along a direction of the first main rail 101. It can also be understood that the first side guide rail part 111 guides the rail vehicle 2 to go straight. An end of the second side guide rail part 112 is arranged adjacent to a side of the second main rail 102 at an interval. Herein, the interval is greater than the wheel flange of the rail vehicle 2, no matter for a turning route or a straight route, the end of the first side guide rail part 111 will never block the wheels of the rail vehicle 2. A guiding direction of a front end of the second side guide rail part 112 extends along a direction of the second main rail 102, and a guiding direction of a rear end of the second side guide rail part 112 extends along a direction of the second branch rail 104. It can also be understood that the second side guide rail part 112 guides the rail vehicle 2 to turn. Before turning, that is, when the rail vehicle 2 is located relatively at the front end of the second side guide rail part 112, the rail vehicle 2 is travelling straightly. When turning, that is, the rail vehicle 2 is located relatively at the rear end of second side guide rail part 112, the rail vehicle 2 begins to turn when the bogie 21 of the rail vehicle 2 is subjected to an interaction force of the second side guide rail part 112. A shape formed by the first side guide rail part 111 and the second side guide rail part 112 resembles a shape of a lowercase letter "r". Those skilled in the art may easily understand that going straight described herein may not be straight in the strict sense, and sometimes may present a certain arc or a Y-shaped route, according to the needs of the driving route. The rail vehicle 2 is a specialized vehicle for fixed turnout track 1 according to embodiments of the present application, which will be mentioned in the second object of the present application.

In a driving route planning scheme, as shown in FIGS. 1-2, the first main rail 101 is located at a left side of the main rails, the second main rail 102 is located at a right side of the main rails. The first branch rail 103 is located at a left side of the branch rails, and the second branch rail 103 is located at a right side of the branch rails. Therefore, the fixed turnout track 1 has straight rails and right turning rails. Those skilled in the art may easily understand that the straight rails herein may not be straight rails in the strict sense, and sometimes may present a certain arc or a Y-shaped route, according to the needs of the driving route.

In a driving route planning scheme, as shown in FIG. 4, the first main rail 101 is located at a right side of the main rails, the second main rail 102 is located at a left side of the main rails. The first branch rail 103 is located at a right side of the branch rails, and the second branch rail 103 is located at a left side of the branch rails. Therefore, the fixed turnout track 1 has straight rails and left turning rails. Those skilled in the art may easily understand that the straight rails herein may not be straight rails in the strict sense, and sometimes may present a certain arc or a Y-shaped route, according to the needs of the driving route.

In an embodiment, the first main rail 101 and the first branch rail 103 are integrated together at a bottom of the flangeway at the intersection therebetween. The bottom of the flangeway at the intersection is integrated together without affecting the passage of the wheels, and the first main rail and the first branch rail can be further fixed to prevent the relative displacement therebetween or movements of both the two over a long time, so as to ensure the driving safety.

In an embodiment, the second main rail 102 and the second branch rail 103 are integrated together at a bottom of the flangeway at the intersection therebetween. The bottom of the flangeway at the intersection is integrated together without affecting the passage of the wheels, and the second main rail and the second branch rail can be further fixed to prevent the relative displacement therebetween or movements of both the two over a long time, so as to ensure the driving safety.

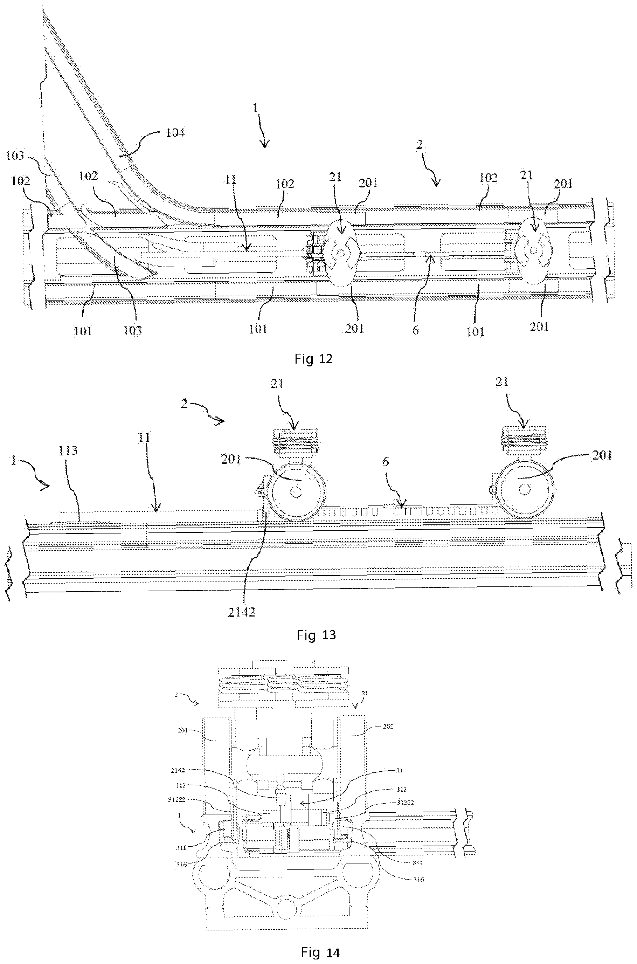

In a further technical scheme, as shown in FIGS. 1-5, a steering pulley protection slope 113 of the first side guide rail part 111 is arranged next to a lower part of the first side guide rail part 111 of the branch guide rail 11, a slope top of the steering pulley protection slope 113 of the first side guide rail part 111 is arranged close to a side of a rear end of the first side guide rail part 111, that is, a rear end of a first side steering pulley protection slope 113 is close to the rear end of the first side guide rail part 111. A steering pulley protection slope 113 of the second side guide rail part 112 is arranged next to a lower part of the second side guide rail part 112 of the branch guide rail 11, a slope top of the steering pulley protection slope 113 of the second side guide rail part 112 is arranged close to a side of a rear end of the second side guide rail part 112, that is, a rear end of a second side steering pulley protection slope 113 is close to the rear end of the second side guide rail part 112. Further, as shown in FIG. 3, the slope top of the steering pulley protection slope 113 of the first side guide rail part 111 protrudes from upper surfaces of adjacent rails, and the slope top of the steering pulley protection slope 113 of the second side guide rail part 112 protrudes from upper surfaces of adjacent rails. Therefore, as shown in FIGS. 13-14 (abnormal conditions are not shown), in case of sudden abnormal conditions, if the steering rod 2142 of the rail vehicle 2 as described in the second object of the present application sags and a bottom surface of the steering rod 2142 is lower than the upper rail surfaces of the fixed turnout track 1, the steering rod 2142 will bump into the fixed turnout track 1 during the advancing process of the rail vehicle 2, based on the arrangement of the steering pulley protection slope 113 and the slop top of the steering pulley protection slope 113 protruding from the upper surfaces of adjacent rails, the abnormal sagging steering rod 2142 of the rail vehicle 2 will move upward due to the interaction force of the steering pulley protection slope 113, keep rising under the action of forward inertia, and finally jump over the upper rail surfaces of the fixed turnout track 1, thereby ensuring the driving safety.

### Example 2

On the basis of the structure of the fixed turnout track 1 as described in Example 1, as shown in FIGS. 5-10 (in order to reduce the number of drawings, refer to the accompanying drawings of Example 3), a front end of the branch guide rail 11 is provided with a collision guide pulley assembly 114, and the collision guide pulley assembly 114 comprises: a support shaft 1145, a guide pulley 1142 rotatably mounted on a top of the support shaft 1145, and a support shaft base 1141. For the convenience of description, the support shaft base 1141 is divided into a first base region and a second base region. The first base region is fixed at a lower part of the front end of the branch guide rail 11, the second base region protrudes from the front end of the branch guide rail 11, and a lower part of the support shaft 1145 is installed at the second base region. The front end of the branch guide rail 11 is a concave structure, which is in clearance fit with the guide pulley 1142. Herein, those skilled in the art should understand that, both the first base region and the second base region are part of the support shaft base 1141 and are structurally integrated as a whole. The first base region mainly acts as a fixed connection with the branch guide rail 11. The fixed connection can be realized by an integrated connection as whole, or other manners, such as welding, riveting, and the like. The second base region can also be understood as a region where the branch guide rail 11 does not overlap with the whole support shaft base 1141. As shown in FIGS. 14-15, in an abnormal condition that the steering rod 2412 of the rail vehicle 2 of the second object of the present application fails to deviate to the left or right in place in advance, the steering rod 2142 of the rail vehicle 2 will collides with the guide pulley 1142 when reaching the front end of the branch guide rail 11, the guide pulley 1142 will guide the steering rod 2142 to enter a corresponding side guide rail part by rolling, thereby alleviating the impact force between the steering rod 2142 of the rail vehicle and the guide pulley 1142 when reaching the front end of the branch guide rail 11 and ensuring the driving safety.

In an embodiment, a lower part of the support shaft 1145 is arranged at a front end of the second base region of the support shaft base, that is, directly in front of the second base region, so that the guide pulley 1142 on the upper part of the support shaft 1145 can equally reduce the impact force of the steering rod 2142 of the rail vehicle 2 in the abnormal condition that the steering rod 2412 of the rail vehicle 2 of the second object of the present application fails to deviate to the left or right in place in advance.

### Example 3

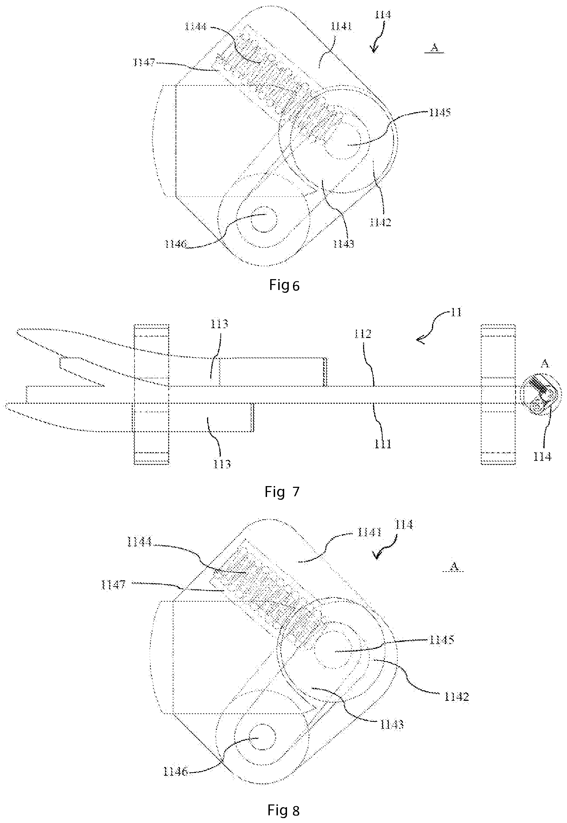

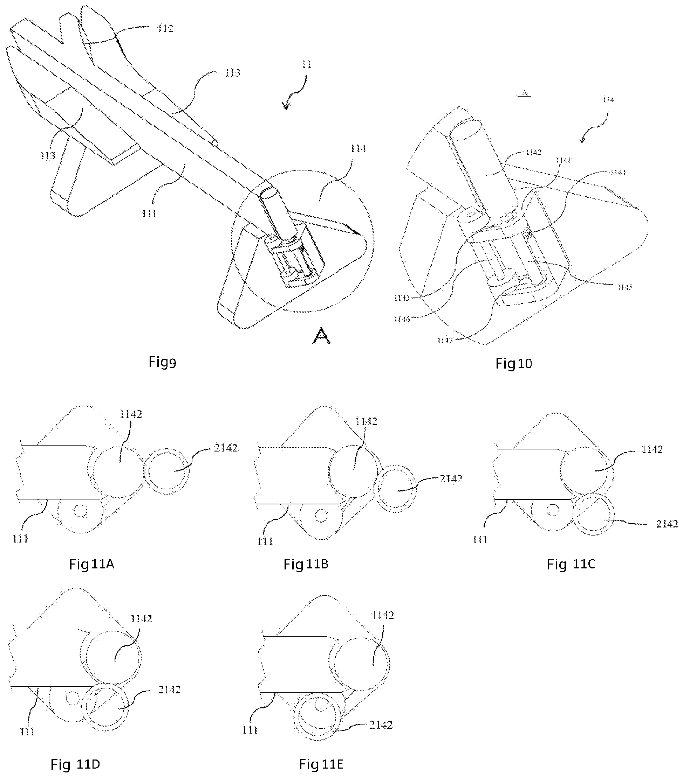

On the basis of the structure of the fixed turnout track 1 as described in the above Example 2, as shown in FIG. 5-10, the support shaft base1141 is provided with a micromotion spring receiving hole 1147, a support shaft micromotion spring 1144, a micromotion support swing arm shaft 1146, and micromotion support swing arms 1143. As shown in FIG. 6, one end of the micromotion spring receiving hole 1147 is closed and ends at a second rear of the second base region, in which, the second rear of the second base region is close to the second side guide rail part 112 of the branch guide rail 11, and the other end of the micromotion spring receiving hole 1147 is opened and an opening extends toward the lower part of the support shaft 1145. As shown in FIG. 6 and FIG. 10, the support shaft micromotion spring 1144 is sleeved in the micromotion spring receiving hole 1147, one end of the support shaft micromotion spring 1144 is fixed at the closed end of the micromotion spring receiving hole 1147, and the other end of the support shaft micromotion spring 1144 is fixed at the lower part of the support shaft 1145. As shown in FIG. 6 and FIG. 10, the micromotion support swing arm shaft 1146 is fixed at a first rear of the second base region, in which, the first rear of the second base region is close to the first side guide rail part 111 of the branch guide rail 11. As shown in FIG. 10, two micromotion support swing arms 1143 are provided. One micromotion support swing arm 1143 has one end being fixed at the support shaft 1145 close to a bottom of the guide pulley 1142, and the other end being rotatably mounted on an upper part of the micromotion support swing arm shaft 1146. The other micromotion support swing arm 1143 has one end being fixed at the support shaft 1145 away from the bottom of the guide pulley 1142, and the other end being rotatably mounted on a lower part of the micromotion support swing arm shaft 1146. In this way, the two micromotion support swing arms 1143, micromotion support swing arm shaft 1146 and a lower half of the support shaft 1145 form a rotatable square frame structure. The guide pulley 1142 is capable of slightly swinging around the micromotion support swing arm 1143 under an action of an external force.

In a case where the collision guide pulley assembly 114 of Example 3 is subjected to an external force, that is, under the interaction force of the steering rod 2142 of the rail vehicle 2 as described in the second object of the present application, the micromotion support swing arm 1143 drives the guide pulley 1142 to slight swing, the process of which will be exemplified hereinbelow, as shown in FIGS. 11A-11E (simplified views) and FIGS. 5-8.

In Example 2, in an abnormal condition that the steering rod 2412 of the rail vehicle 2 of the second object of the present application fails to deviate to the left or right in place in advance, when the steering rod 2142 of the rail vehicle 2 reaches the front end of the branch guide rail 11 and frontally collides with the guide pulley 1142 just in time, because the steering rod 2142 has no force component in the vertical direction, the guide pulley 1142 and the steering rod 2142 will be subjected to a strong interaction force, the steering rod 2142 may break and result in danger. In order to avoid the occurrence of this situation in Example 2, when the steering rod 2142 of the rail vehicle 2 and the guide pulley 1142 frontally collides just in time, the collision guide pulley assembly 114 in this embodiment can transfer the strong interaction force sequentially as follows.
a) As shown in FIG. 11A, the steering rod 2142 of the rail vehicle 2 and the guide pulley 1142 just frontally collides;
b) As shown in FIG. 11B and FIGS. 7-8, the guide pulley 1142 moves slightly to the second rear of the second base region, at such moment, the steering rod 2142 of the rail vehicle and the guide pulley 1142 are not in a frontal collision state any longer;
c) As shown in FIG. 11C, the steering rod 2142 of the rail vehicle moves toward the side of the first side guide rail part 111 under the rolling guidance of the guide pulley 1142;
d) As shown in FIG. 11D, the steering rod 2142 of the rail vehicle is separated from the guide pulley 1142. At the same time, as shown in FIGS. 5-6, the guide pulley 1142 returns to the position as shown in FIG. 11A under the action of the support shaft micromotion spring 1144; and
e) Finally, as shown in FIG. 11E, the steering rod 2142 of the rail vehicle safely enters the first side guide rail part 111 without generating a strong impact force, thereby ensuring the driving safety.

Those skilled in the art should understand that under normal circumstances, the above steering rod 2142 does not contact with the guide pulley 1142, but directly enters the side of the first side guide rail part 111 or the side of the second side guide rail part 112 according to the driving route, and even in abnormal condition where the steering rod 2142 of the rail vehicle 2 fails to deviate to the left or right in place in advance, the abnormality can be detected by a corresponding sensor in advance and emergency braking is performed. The frontal collision between the steering rod 2142 and the guide pulley 1142 occurs in the abnormal condition where the steering rod 2142 of the rail vehicle 2 fails to deviate to the left or right in place in advance, as well as the failure of the corresponding sensor, the probability is very low.

A vehicle-mounted track change system according to the second object of the present application is described hereinbelow with reference to the accompanying drawings.

### Example 4

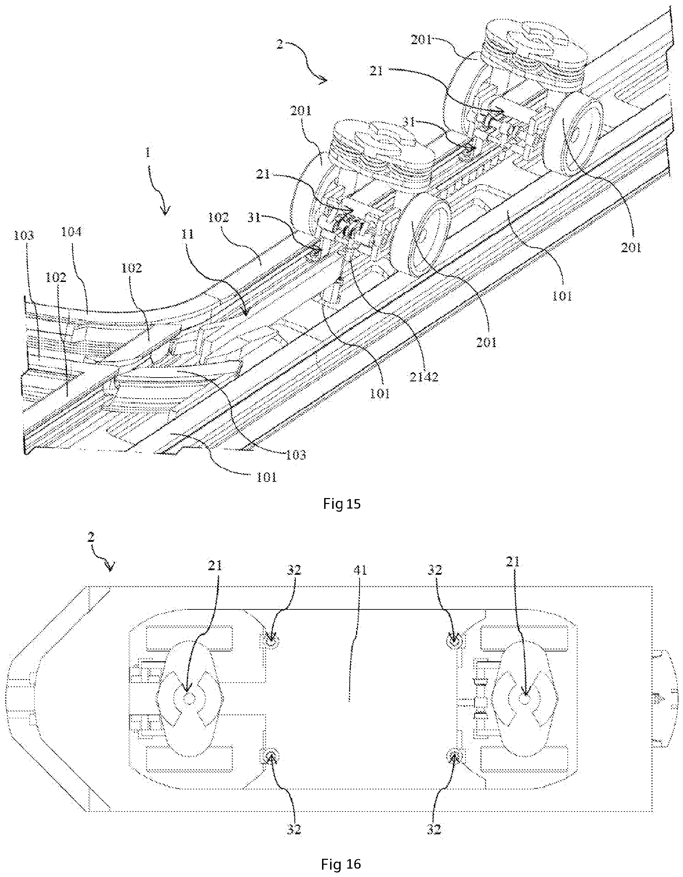

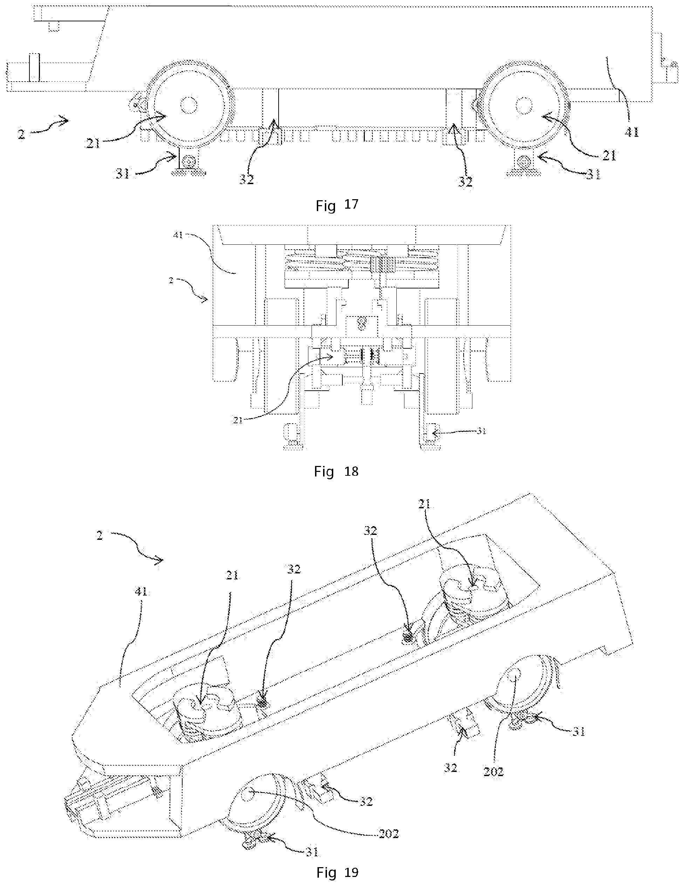

As shown in FIGS. 12-15 (the vehicle body 41 is hidden), the present example provides a vehicle-mounted track change system, comprising the fixed turnout track 1 described in any one of the Examples 1-3, and a rail vehicle 2, the rail vehicle 2 travels exclusively on the fixed turnout track 1. As shown in FIGS. 16-19, the rail vehicle 2 comprises a vehicle body 41 and bogies 21, and each bogie 21 is installed at a bottom of the vehicle body 41. The bogie 21 comprises: a wheelset assembly , a frame, and a track change device. The frame is installed at the wheelset assembly, the track change device is installed at the frame, and the track change device is adapted to cooperate with the branch guide rail 11 of the fixed turnout track 1 to guide the rail vehicle 2 to enter the main rails or the branch rails through the turnout. It can also be understood that the track change device acts in advance according to a predetermined driving route, and when the rail vehicle 2 is turning or going straight, the track change device cooperates with the branch guide rail 11 to limit a motion range of the bogie 21, that is, the bogie 21 can only turn or go straight according to the predetermined driving route, so that the autonomous steering function of the bogie 21 of the rail vehicle 2 can be realized. The rails themselves do not need to be pulled by the turnout switch machine, and positions thereof remain unchanged, so that the vehicle can run at smaller intervals, with high safety, good reliability, and smooth steering. It can operate at smaller intervals, has high safety, good reliability, and has the advantages of smooth steering, which can meet the requirements of high-density or even zero-following distance traffic flow and fast steering, which is beneficial for the popularity of the new rail transit personal rapid transit (PRT) system.

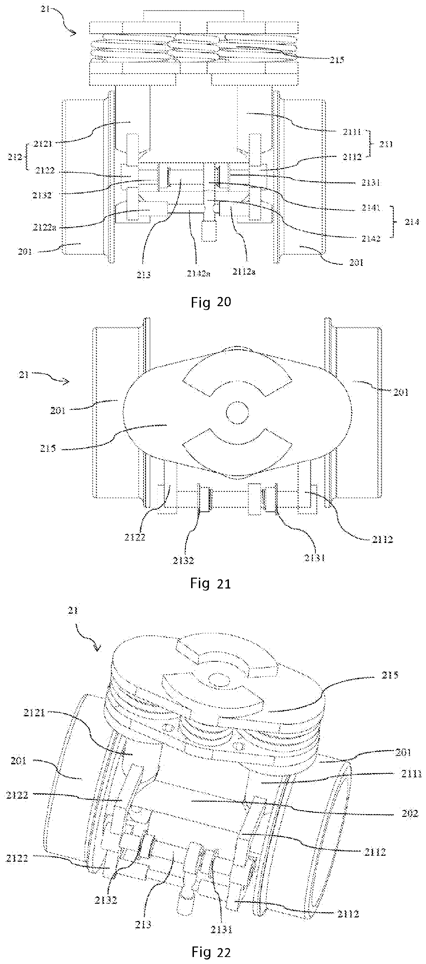

First specifically, as shown in FIG. 22, the wheelset assembly comprises an axle 202 and two wheels 201. The wheels 201 are installed on the axle 202, and a forward direction of the wheels 201 is always perpendicular to the axle 202, that is, the wheels 201 cannot form a non-90-degree angle with the axle 202 structurally to complete the steering. It can also be understood that the wheels 201 are like the rear wheels of a car, the forward direction of the wheels is always perpendicular to the axle, and the wheels 201 cannot be turned by tilting the wheel angle to the left or the right like the front wheels of a car. Therefore, the wheelset assembly travels on the rails, derailment will not be resulted due to the inclination of the axel 202 from the rails.

Second specifically, as shown in FIG. 20, the frame comprises a first semi-frame 211 and a second semi-frame 212. The first semi-frame 211 comprises a first support column 2111 and a first steering arm 2112, and a front end of the first steering arm 2112 is in fixed connection with the first support column 2111. The second semi-frame 212 comprises a second support column 2121 and a second steering arm 2122, and a front end of the second steering arm 2122 is in fixed connection with the second support column 2121. As shown in FIG. 22, both the first support column 2111 and the second support column 2121 are in lap joint with the axle 202. Since the front end of the first steering arm 2112 is in fixed connection with the first support column 2111 and the front end of the second steering arm 2122 is in fixed connection with the second support column 2121, if a torque is applied to the first steering arm 2112 and the second steering arm 2122, the axle 202 can twist left and right, that is, turn left and right. As shown in FIGS. 20-22, a support plate 215 is fixed above the first support column 2111 and the second support column 2121, and the bottom of the vehicle body is rotatably connected to the center of the support plate 215. The support plate 215 plays a role in supporting the entire vehicle body. When the rail vehicle 2 is turning, under the cooperation with the branch guide rail 11, the bogie 21 rotates along a central axis of the support plate 215 to realize steering.

Third specifically, as shown in FIG. 20, the track change device comprises: a steering crossbeam 213, a steering part 214, and a power device (not shown in the figures). As shown in FIGS. 20-22, both ends of the steering crossbeam 213 are respectively fixed at a rear end of the first steering arm 2112 and a rear end of the second steering arm 2122. A first side stopper 2131 and the second side stopper 2132 are arranged on the steering crossbeam 213, and the first side stopper 2131 and the second side stopper 2132 are symmetrical to a center of the steering crossbeam 213. Herein, the first side stopper 2131 and the second side stopper 2132 can functions in transmitting the force. Apart between the first side stopper 2131 and the center of the steering crossbeam 213 is defined as a first side moving part, and a part between the second side stopper 2132 and the center of the steering crossbeam 213 is defined as a second side moving part. Herein, those skilled in the art should understood that, for the convenience of description, there is no physical boundary between the first side moving part and the second side moving part, and the first side moving part and the second side moving part are integrated as a whole. As shown in FIG. 20, the steering part 214 comprises a slider 2141 and a steering rod 2142, the steering rod 2142 extends vertically downward, an upper end of the steering rod 2142 is in fixed connection with a lower part of the slider 2141, the slider 2141 is slidably installed on the steering crossbeam 213 and is adapted to move left and right along a length direction of the steering crossbeam 213 within a range of the first side moving part and the second side moving part. The power device is connected with the slider 2141. The power device is used to drive the slider 2141 to move left and right along the length direction of the steering crossbeam 213, where the power device can be driven by a motor, electromagnetic drive, hydraulic drive, or the like. A lowest point of a lower end of the steering rod 2142 is higher than upper rail surfaces of the fixed turnout track 1 and lower than a highest surface of the branch guide rail 11, that is to say, when traveling through a turnout, the steering rod 2142 and the branch guide rail 11 must have enough chances to contact each other without colliding with the fixed turnout track 1. Therefore, the steering rod 2142 can not only fully cooperate with the branch guide rail 11 to complete the autonomous guide, but also can avoid collision with the fixed turnout track 1.

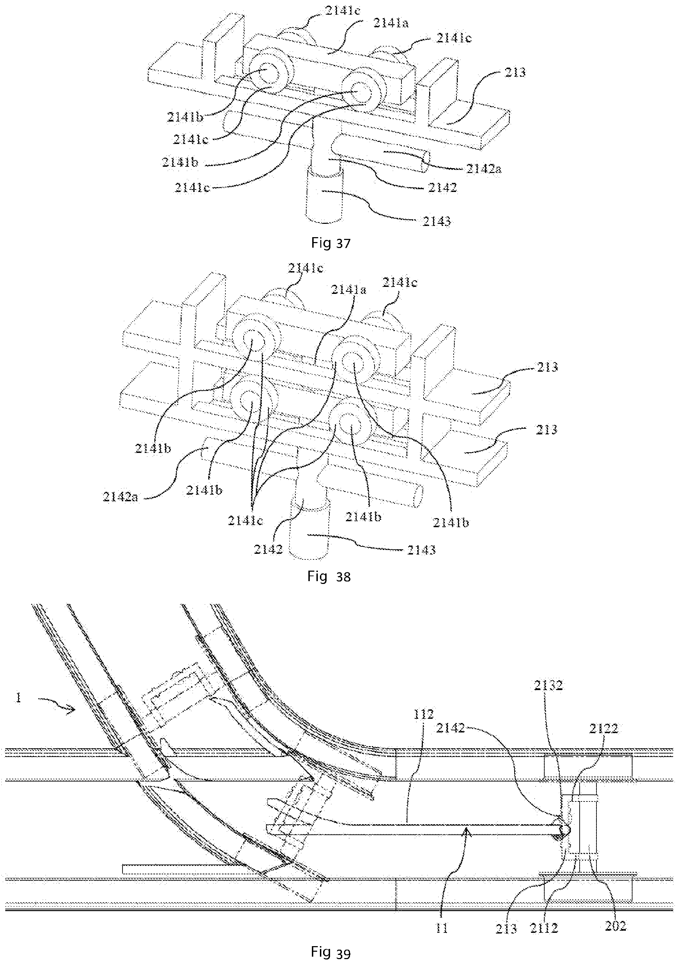

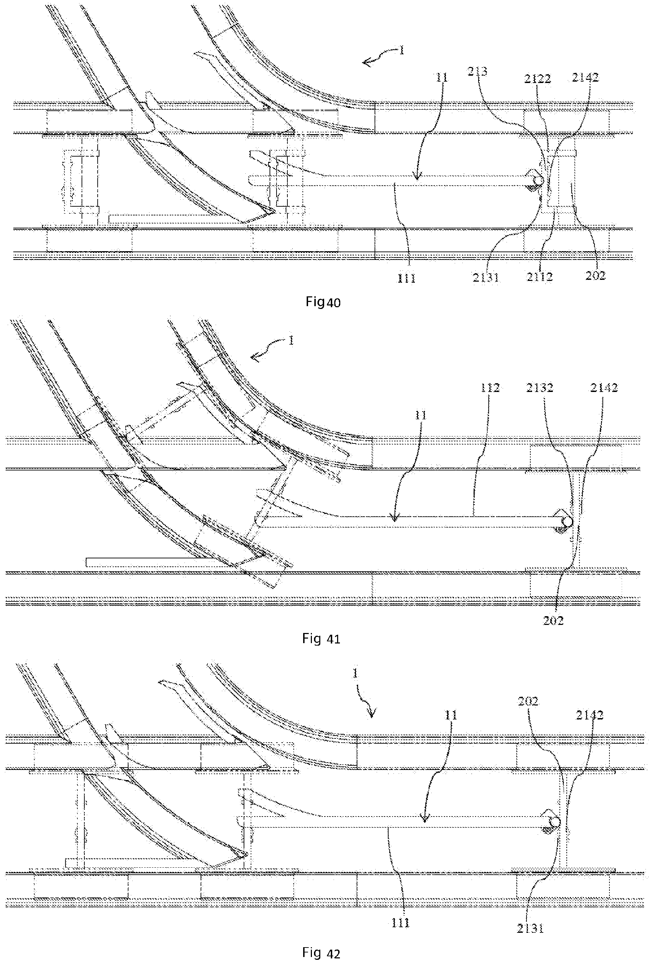

In this scheme, the slider 2141 may be located at the first side moving part or the second side moving part in advance according to the driving route. For example, as shown in FIG 20, the slider 2141 is located at the first side moving part in advance according to the driving route. Before the rail vehicle 2 reaches the branch guide rail 11, as shown in FIG. 40 (simplified schematic view, the slider 2141 is not shown), when the slider 2141 is located at the first side moving part in advance, the steering rod 2142 is blocked by the first side guide rail part 111 of the branch guide rail 11, and cooperates with the track change device to force the rail vehicle 2 to move forward along a main rail direction. Before the rail vehicle 2 reaches the branch guide rail 11, as shown in FIG. 39 (simplified schematic view, the slider 2141 is not shown), when the slider 2141 is located at the second side moving part in advance, the steering rod 2142 is blocked by the second side guide rail part 112 of the branch guide rail 11, and cooperates with the track change device to force the rail vehicle 2 to move forward along a branch rail direction.

Hereinbelow, the advancing process of the rail vehicle 2 of the vehicle-mounted track change system as described in Example 4 along the main rail direction through the turnout, which may also be understood as a straight-traveling process, will be described in more detail: before the rail vehicle 2 arrives at the branch guide rail 11, as shown in FIG. 40 (simplified schematic view, the slider 2141 is not shown), the slider 2141 is driven by the power device (not shown in the figures) to be located at first side moving part in advance, those skilled in the art can easily understand that herein "in advance" may refer to a time point before the rail vehicle 2 exiting a previous turnout, in addition, the front end of the branch guide rail 11 may not be necessarily at the entrance of the turnout. If desired, the front end of the branch guide rail 11 here may also be close to the exit of the previous turnout. As shown in FIG. 20, FIG. 21, FIG. 22 and FIG. 40, when the rail vehicle 2 reaches the front end of the branch guide rail 11, since the lowest point of the lower end of the steering rod 2142 is higher than upper rail surfaces of the fixed turnout track 1 and is lower than a highest surface of the branch guide rail 11, the steering rod 2142 is blocked by the first side guide rail part 111 of the branch guide rail 11, in such moment, the slider 2141 on the steering crossbeam 213 can only move between the first side stopper 2131 and the first side guide rail part 111 of the branch guide rail 11. As the rail vehicle 2 moves forward, the movement interval of the slider 2141 on the steering crossbeam 213 will gradually be limited within a small safety range, and in such condition, the movement interval may not be zero, or may also be zero. When the movement interval of the slider 2141 on the steering crossbeam 213 is zero, the slider 2141 is in contact with the first side stopper 2131 on the steering crossbeam 213, the interaction force between the first side guide rail part 111 and the steering rod 2142 will be transmitted to the steering crossbeam 213, the steering crossbeam 213 will transmit the interaction force to the first steering arm 2112 and the second steering arm 2122 at the same time, and the first steering arm 2112 and the second steering arm 2122 will simultaneously transmit the interaction force to the first support column 2111 and the second support column 2121 through a torsion mode and a horizontal push mode, and the first support column 2111 and the second support column 2121 will simultaneously transmit the interaction force to the axle 202 through the torsion mode and the horizontal push mode, and then the axle 202 drives the wheels 201 to complete the torsion and horizontal displacement, thereby ensuring that the wheels of the rail vehicle 2 will not hit the rail tip and thus safely exit the turnout and advance along the mail rail direction. Here, those skilled in the art need to understand that the sliders 2141 on all the bogies 21 of the rail vehicle 2 are synchronously positioned at the first side moving part in advance under the drive of the power device (not shown in the figures), therefore, all the wheels on the bogies 21 are advancing along the main rail direction. Those skilled in the art can easily understand that the straight-traveling mentioned here may not be strictly a straight line route, and sometimes there will be a certain arc or a Y-shaped route according to the needs of the driving route.

Hereinbelow, the advancing process of the rail vehicle 2 of the vehicle-mounted track change system as described in Example 4 along the branch rail direction through the turnout, which may also be understood as a straight-traveling process, will be described in more detail: before the rail vehicle 2 arrives at the branch guide rail 11, as shown in FIG. 39 (simplified schematic view, the slider 2141 is not shown), the slider 2141 is driven by the power device (not shown in the figures) to be located at second side moving part in advance, those skilled in the art can easily understand that herein "in advance" may refer to a time point before the rail vehicle 2 exiting a previous turnout, in addition, the front end of the branch guide rail 11 may not be necessarily at the entrance of the turnout. If desired, the front end of the branch guide rail 11 here may also be close to the exit of the previous turnout. As shown in FIG. 20, FIG. 21, FIG. 22 and FIG. 39, when the rail vehicle 2 reaches the front end of the branch guide rail 11, since the lowest point of the lower end of the steering rod 2142 is higher than upper rail surfaces of the fixed turnout track 1 and is lower than a highest surface of the branch guide rail 11, the steering rod 2142 is blocked by the second side guide rail part 112 of the branch guide rail 11, in such moment, the slider 2141 on the steering crossbeam 213 can only move between the second side stopper 2132 and the second side guide rail part 112 of the branch guide rail 11. As the rail vehicle 2 moves forward, the movement interval of the slider 2141 on the steering crossbeam 213 will gradually be limited within a small safety range, and in such condition, the movement interval may not be zero, or may also be zero. When the wheels of the rail vehicle 2 reach the turning position of the rails, the movement interval of the slider 2141 on the steering crossbeam 213 is zero, the slider 2141 is in contact with the second side stopper 2132 on the steering crossbeam 213, the interaction force between the second side guide rail part 112 and the steering rod 2142 will be transmitted to the steering crossbeam 213, the steering crossbeam 213 will transmit the interaction force to the first steering arm 2112 and the second steering arm 2122 at the same time, and the first steering arm 2112 and the second steering arm 2122 will simultaneously transmit the interaction force to the first support column 2111 and the second support column 2121 through a torsion mode and a horizontal push mode, and the first support column 2111 and the second support column 2121 will simultaneously transmit the interaction force to the axle 202 through the torsion mode and the horizontal push mode, and then the axle 202 drives the wheels 201 to complete the torsion and horizontal displacement, thereby ensuring that the wheels of the rail vehicle 2 will not hit the rail tip and thus safely exit the turnout and advance along the branch rail direction. Here, those skilled in the art need to understand that the sliders 2141 on all the bogies 21 of the rail vehicle 2 are synchronously positioned at the first side moving part in advance under the drive of the power device (not shown in the figures), therefore, all the wheels on the bogies 21 are advancing along the branch rail direction.

Those skilled in the art can easily understand that when the steering rod 2142 and the first side guide rail part 111 or the second side guide rail part 112 of the branch guide rail 11 produce an interaction force is determined by the path of the first side guide rail part 111 or the path of the second side guide rail part 112 of branch guide rail 11, while the setting of the path of the first side guide rail part 111 or the path of the second side guide rail part 112 of branch guide rail 11 is determined by the path of the main rail and the path of the branch rail, respectively. The setting of the path of the first side guide rail part 111 or the path of the second side guide rail part 112 of branch guide rail 11 can have a certain safety tolerance, and since the branch guide rail 11 is fixed, it is avoided the abnormal situations where the switching of the mechanical turnout switch machine cannot be in place, thus the safety is high and zero-following distance follow-up can be achieved theoretically.

In addition, "first specifically", "second specifically", "third specifically" are only for distinguishing descriptions so that the following descriptions can be quickly positioned to the previous description, and should not be construed as progressive or exclusive relationship, nor interpreted as indication or imply of relative importance.

In some schemes of Example 4 (first specifically), as shown in FIGS. 20-22, the wheels 201 are installed at two ends of the axle 202, both the first support column 2111 and the second support column 2121 are in lap joint with the axle 202 and close to inner sides of the corresponding wheels 201. The wheels are arranged at outside the first support column 2111 and the second support column 2121, thus being easily to be disassembled and convenient to be maintained.

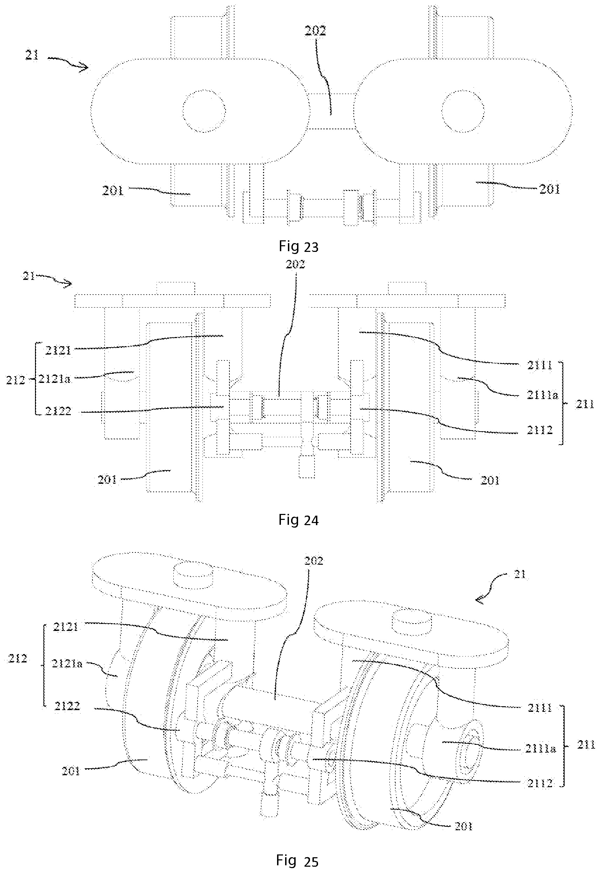

In some schemes of Example 4 (first specifically), as shown in FIGS. 23-25, the wheels 201 are installed at the axle 202 and two ends of the axle 202 protrude from the corresponding wheels 201, a first auxiliary support column 2111a is arranged beside the first support column 2111, a second auxiliary support column 2121a is arranged beside the second support column 2121, both the first auxiliary support column 2111a and the second auxiliary support column 2121a are in lap joint with the two ends of the axle 202, and both the first support column 2111 and the second support column 2121 are in lap joint with the axle 202 and are close to inner sides of the corresponding wheels 201. Thus, due to the addition of the first auxiliary support column 2111a and the second auxiliary support column 2121a, the driving stability of the vehicle is enhanced.

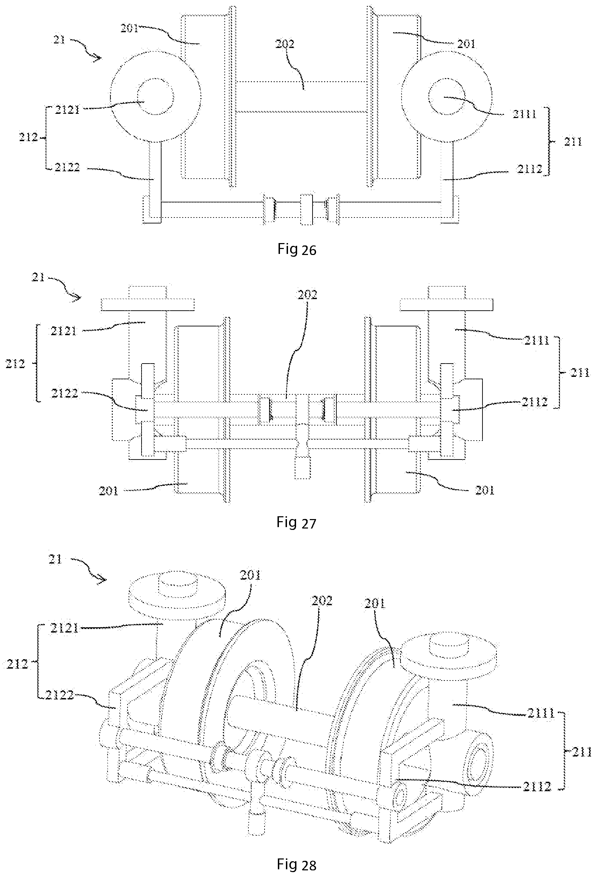

In some schemes of Example 4 (first specifically), as shown in FIGS. 26-28, the wheels 201 are installed at the axle 202 and two ends of the axle 202 protrude from the corresponding wheels 201, and both the first support column 2111 and the second support column 2121 are in lap joint with two ends of the axle 202. Thus, the wheels are arranged inside the first support column 2111 and the second support column 2121, which can maintain a certain stability while increasing the width of the vehicle body.

In some schemes of Example 4 (second specifically), as shown in FIGS. 20-22, the first steering arm 2112 is arranged directly in front of the first support column 2111, and the second steering arm 2122 is located directly in front of the second support column 2121. It can be understood that due to leverage action, the first steering arm and the second steering arm can easily complete the turning with a little force when the corresponding wheels reach the turning position.

### Example 5

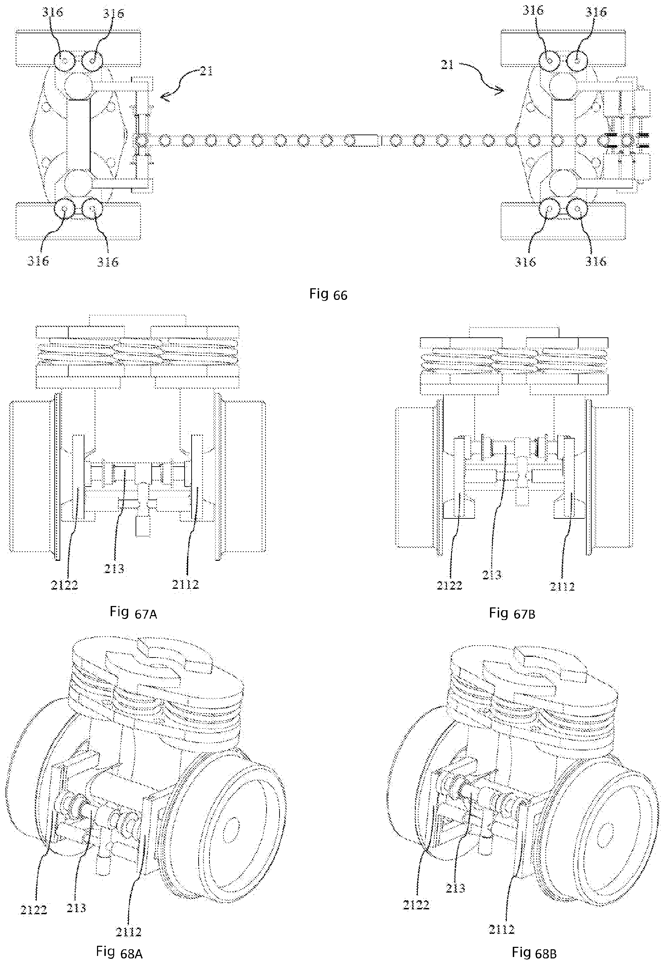

The vehicle-mounted track change system of Example 5 is the same as that as described in Example 4 except the following, as shown in FIG. 67A, FIG. 67B, FIG. 68A and FIG. 68B, two ends of the steering crossbeam 213 are installed at a rear end of a first steering arm 2112 and a rear end of the second steering arm 2122, respectively, the power device (not shown in the figures) comprises a horizontal power device and a longitudinal power device, and the other structures are completely the same as those of Example 4. The horizontal power device is connected with the slider 2141 and used to drive the slider 2141 to move left and right along the length direction of the steering crossbeam 213. The longitudinal power device is connected with the steering crossbeam 213 and used to drive the steering crossbeam 213 to move up and down. When the two ends of the steering crossbeam 213 move down to a lowest point, a lowest point of a lower end of the steering rod 2142 is higher than upper rail surfaces of the fixed turnout track 1 and lower than the highest surface of the branch guide rail 11. Before the rail vehicle 2 reaches the branch guide rail 11, the two ends of the steering crossbeam 213 are at the lowest points of the end of the first turning arm 2112 and the end of the second turning arm 2122, which is the same as that of the above Example 4, when the slider 2141 is located at the first side moving part in advance, the steering rod 2142 is blocked by the first side guide rail part 111 of the branch guide rail 11, and cooperates with the track change device to force the rail vehicle 2 to move forward along a main rail direction. When the slider 2141 is located at the second side moving part in advance, the steering rod 2142 is blocked by the second side guide rail part 112 of the branch guide rail 11, and cooperates with the track change device to force the rail vehicle 2 to move forward along a branch rail direction. Since the two ends of the steering crossbeam 213 are respectively movable up and down on the rear end of the first steering arm 2112 and the rear end of the second turning arm 2122, respectively, when the rail vehicle 2 is travelling on non-branched rails, as shown in FIG. 67A and FIG. 68A, the two ends of the steering crossbeam 213 can be kept at the lowest points of the first steering arm 2112 and the second steering arm 2122, as shown in FIG. 67B and FIG. 68B, the two ends of the steering crossbeam 213 can also be moved up to a highest point as required. In this scheme, the track change device has a simple structure, high safety, and excellent reliability, and can meet the requirements of rapid steering in high-density or even zero-following distance traffic flow. In addition, when the rail vehicle 2 is travelling on the non-branched rails, the two ends of the steering crossbeam 213 can move up to the highest point, that is, the track change device can move up and down, so that the steering part can be prevented from colliding with raised objects such as small stones on the road in sections where a road surface is compatible with the rails.

### Example 6

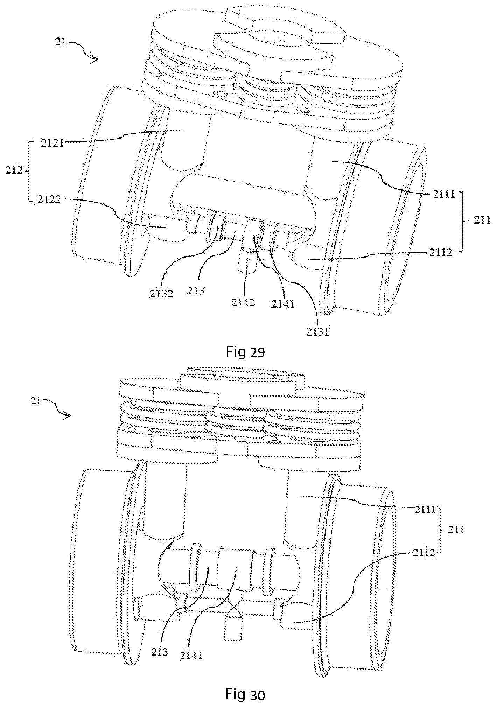

Example 6 is different from some schemes of the above Example 4 (the second specifically) in that, as shown in FIG. 29, the first steering arm 2112 is located right beneath the first support column 2111, and the second steering arm 2122 is located right beneath the second support column 2121. Other structures are completely the same as those in Example 4. In this way, the first steering arm and the second steering arm as well as the corresponding wheels can start to receive the force at the same time and therefore realize the turning at the turning position.

Hereinbelow, the advancing process of the rail vehicle 2 of the vehicle-mounted track change system as described in Example 6 along the main rail direction through the turnout, which may also be understood as a straight-traveling process, will be described in more detail: before the rail vehicle 2 arrives at the branch guide rail 11, as shown in FIG. 42 (simplified schematic view, the slider 2141 is not shown), the slider 2141 is driven by the power device (not shown in the figures) to be located at first side moving part in advance, those skilled in the art can easily understand that herein "in advance" may refer to a time point before the rail vehicle 2 exiting a previous turnout. As shown in FIG. 29 and FIG. 42, when the rail vehicle 2 reaches the front end of the branch guide rail 11, since the lowest point of the lower end of the steering rod 2142 is higher than upper rail surfaces of the fixed turnout track 1 and is lower than a highest surface of the branch guide rail 11, the steering rod 2142 is blocked by the first side guide rail part 111 of the branch guide rail 11, in such moment, the slider 2141 on the steering crossbeam 213 can only move between the first side stopper 2131 and the first side guide rail part 111 of the branch guide rail 11. In addition, the front end of the branch guide rail 11 may not be necessarily at the entrance of the turnout. If desired, the front end of the branch guide rail 11 here may also be close to the exit of the previous turnout. As the rail vehicle 2 moves forward, the movement interval of the slider 2141 on the steering crossbeam 213 will gradually be limited within a small safety range, and in such condition, the movement interval may not be zero, or may also be zero. When the movement interval of the slider 2141 on the steering crossbeam 213 is zero, the slider 2141 is in contact with the first side stopper 2131 on the steering crossbeam 213, the interaction force between the first side guide rail part 111 and the steering rod 2142 will be transmitted to the steering crossbeam 213, the steering crossbeam 213 will transmit the interaction force to the first steering arm 2112 and the second steering arm 2122 at the same time, and the first steering arm 2112 and the second steering arm 2122 will simultaneously transmit the interaction force to the first support column 2111 and the second support column 2121 through a horizontal push mode, and the first support column 2111 and the second support column 2121 will simultaneously transmit the interaction force to the axle 202 through the horizontal push mode, and then the axle 202 drives the wheels 201 to complete horizontal displacement, thereby ensuring that the wheels of the rail vehicle 2 will not hit the rail tip and thus safely exit the turnout and advance along the mail rail direction. Here, those skilled in the art need to understand that the sliders 2141 on all the bogies 21 of the rail vehicle 2 are synchronously positioned at the first side moving part in advance under the drive of the power device (not shown in the figures), therefore, all the wheels on the bogies 21 are advancing along the main rail direction. Those skilled in the art can easily understand that the straight-traveling mentioned here may not be strictly a straight line route, and sometimes there will be a certain arc or a Y-shaped route according to the needs of the driving route.

Hereinbelow, the advancing process of the rail vehicle 2 of the vehicle-mounted track change system as described in Example 6 along the branch rail direction through the turnout, which may also be understood as a straight-traveling process, will be described in more detail: before the rail vehicle 2 arrives at the branch guide rail 11, as shown in FIG. 41 (simplified schematic view, the slider 2141 is not shown), the slider 2141 is driven by the power device (not shown in the figures) to be located at second side moving part in advance, those skilled in the art can easily understand that herein "in advance" may refer to a time point before the rail vehicle 2 exiting a previous turnout. As shown in FIG. 29 and FIG. 41, when the rail vehicle 2 reaches the front end of the branch guide rail 11, since the lowest point of the lower end of the steering rod 2142 is higher than upper rail surfaces of the fixed turnout track 1 and is lower than a highest surface of the branch guide rail 11, the steering rod 2142 is blocked by the second side guide rail part 112 of the branch guide rail 11, in such moment, the slider 2141 on the steering crossbeam 213 can only move between the second side stopper 2132 and the second side guide rail part 112 of the branch guide rail 11. In addition, the front end of the branch guide rail 11 may not be necessarily at the entrance of the turnout. If desired, the front end of the branch guide rail 11 here may also be close to the exit of the previous turnout. As the rail vehicle 2 moves forward, the movement interval of the slider 2141 on the steering crossbeam 213 will gradually be limited within a small safety range, and in such condition, the movement interval may not be zero, or may also be zero. When the wheels of the rail vehicle 2 reach the turning position of the rails, the movement interval of the slider 2141 on the steering crossbeam 213 is zero, the slider 2141 is in contact with the second side stopper 2132 on the steering crossbeam 213, the interaction force between the second side guide rail part 112 and the steering rod 2142 will be transmitted to the steering crossbeam 213, the steering crossbeam 213 will transmit the interaction force to the first steering arm 2112 and the second steering arm 2122 at the same time, and the first steering arm 2112 and the second steering arm 2122 will simultaneously transmit the interaction force to the first support column 2111 and the second support column 2121 through a horizontal push mode, and the first support column 2111 and the second support column 2121 will simultaneously transmit the interaction force to the axle 202 through the horizontal push mode, and then the axle 202 drives the wheels 201 to complete the horizontal displacement, thereby ensuring that the wheels of the rail vehicle 2 will not hit the rail tip and thus safely exit the turnout and advance along the branch rail direction. Here, those skilled in the art need to understand that the sliders 2141 on all the bogies 21 of the rail vehicle 2 are synchronously positioned at the first side moving part in advance under the drive of the power device (not shown in the figures), therefore, all the wheels on the bogies 21 are advancing along the branch rail direction.

In order to further simplify the structure, in some specific embodiments, as shown in FIG. 30, the axle 202 is replaced by the steering crossbeam 213, and the wheels 201 are installed at the steering crossbeam 213.

Those skilled in the art can understand that the above Example 6 is described on the basis of the above Example 4. Although the structure of the above Example 6 is simpler and more compact, compared with the Example 4, the above Example 6 suffers from a much greater lateral thrust than that of Example 4, causing greater loss to the rail vehicle 2, and the rail vehicle 2 as described in the above Example 6 is only suitable for low-speed travel. In the further description of the following Example 4 (continued), it is not applicable or has no practical significance for the above Example 6. If "Example 6" is placed in order after the end of the description of the entire "Example 4", then the description that " other structures are completely the same as those in Example 4" in the above Example 6 will cause confliction. Thus, for the convenience of expression, the Example 6 is described in the Example 4, that is, the other structures of the above Example 6 are only completely the same with those in the above Example 4, but not the same as the following Example 4 (continued).

### Example 4 (continued)

The above Example 4 will be further described hereinbelow.

In a scheme of Example 4 (second specifically), as shown in FIG. 22, two first steering arms 2112 are provided, front ends of the two first steering arms 2112 are fixed at an upper part and a lower part of the first support column 2111, respectively, and rear ends of the two first steering arms 2112 are converged together. Two second steering arms 2122 are provided, front ends of the two second steering arms 2122 are fixed at an upper part and a lower part of the second support column 2121, respectively, and rear ends of the two second steering arms 2122 are converged together. It can be understood that the two first steering arms 2112 and the two second steering arms 2122 can strengthen the fixation, thereby improving the safety of the rail vehicle 2 when turning.

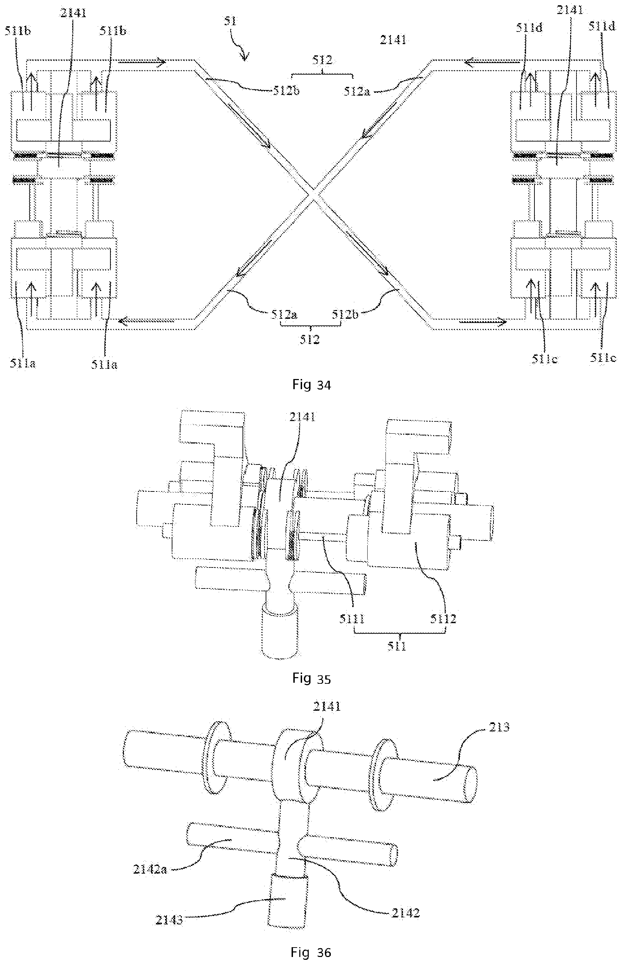

In some schemes of Example 4 (third specifically), the slider 2141 can have various structures as follows:
For example, as shown in FIG. 36, the slider 2141 adopts a ring structure, the steering crossbeam 213 adopts a cylindrical structure, and the slider 2141 is sleeved on the steering crossbeam 213. The slider 2141 adopts the ring structure, which can smoothly slide left and right on the corresponding region on the steering crossbeam, thereby simplifying the structure and reducing the cost.

For another example, as shown in FIG. 37, the slider 2141 comprises a slider body 2141a, two slider axels 2141b, and four slider pulleys 2141c, the slider body 2141a is a cuboid, the two slider axels 2141b are perpendicularly installed at two ends of the slider body 2141a, respectively, and the four slider pulleys 2141c are installed at two ends of the two slider axels 2141b, respectively, the steering crossbeam 213 is a planar structure and defines a downward rectangular opening in a center, the slider pulleys 2141c are capable of running on two sides of the rectangular opening in the steering crossbeam 213. The slider 2141 adopts a structure similar to a four-wheel trolley in this specific example, which can improve the stability of the slider 2141 in the process of sliding left and right in the corresponding region on the steering crossbeam.

In order to meet the stability requirements, as shown in FIG. 38, in another example, the slider 2141 comprises: a slider body 2141a, four slider axels 2141b, and eight slider pulleys 2141c; the slider body 2141a adopts an H-shaped structure, the four slider axels 2141b are perpendicularly installed at the four ends of the H-shaped structure of the slider body 2141a, respectively; the eight slider pulleys 2141c are respectively installed at two ends of the four slider axels 2141b, respectively; the steering crossbeam 213 is a two-layer planar structure, the two-layer planar structure define a downward rectangular opening in a center of each layer, four slider pulleys 2141c arranged at an upper part of the H-shaped structure of the slider body 2141a are capable of running on two sides of the upper rectangular opening in the steering crossbeam 213; and four slider pulleys 2141c arranged at a lower part of the H-shaped structure of the slider body 2141a are capable of running on two sides of the lower rectangular opening in the steering crossbeam 213. The slider 2141 adopts the upper and lower layers similar to a four-wheel trolley conjoined structure in this specific example, which can further improve the stability of the slider 2141 in the process of sliding left and right in the corresponding area on the steering crossbeam.

In a further scheme of Example 4 (third specifically), as shown in FIGS. 37 to 38 and FIG. 20, the steering part 214 is provided with a stabilizing bar 2142a, and the stabilizing bar 2142a perpendicularly crosses and is fixedly arranged at a middle part of the steering rod 2142, and is parallel to the steering crossbeam 213. As shown in FIG. 20, a first stabilizing bar limiting structure 2112a is arranged beneath the rear end of the first steering arm 2112, one end of the stabilizing bar 2142a is in slidable connection with the first stabilizing bar limiting structure 2112a. A second stabilizing bar limiting structure 2122a is arranged beneath the rear end of the second steering arm 2122, and the other end of the stabilizing bar 2142a is in slidable connection with the second stabilizing bar limiting structure 2122a. Thus, the stabilizing bar can prevent jamming phenomenon during the movement of the slider 2141 driven by the steering rod 2142 caused by uneven upper and lower force.

### Example 7

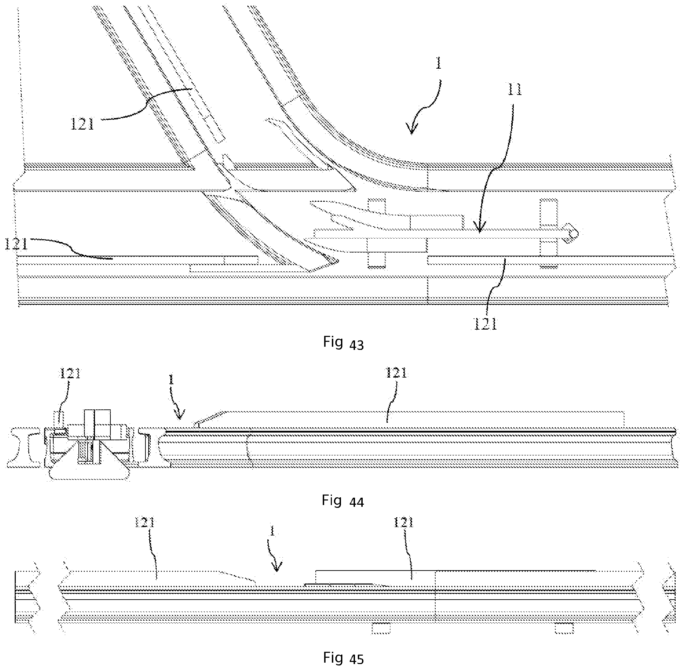

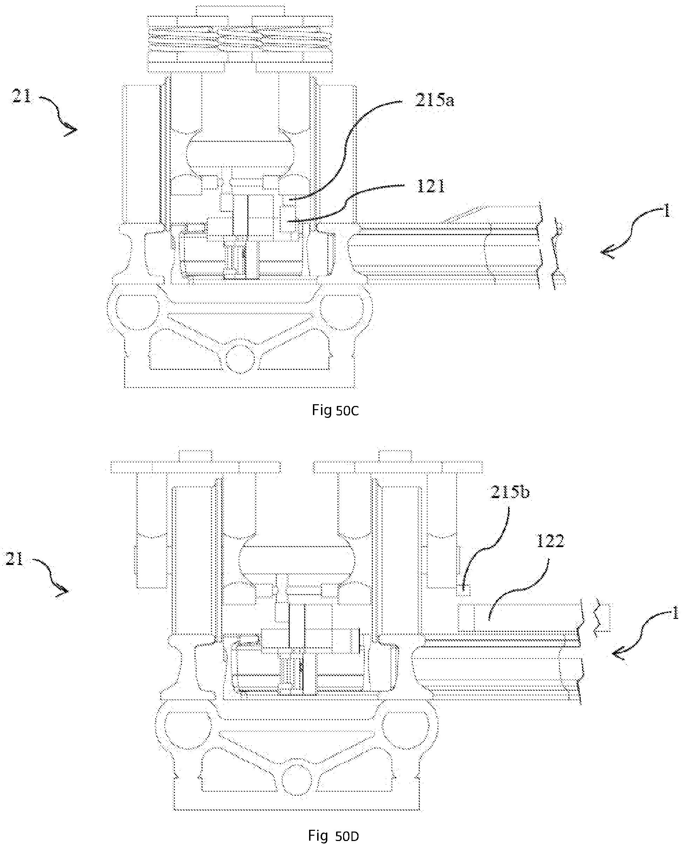

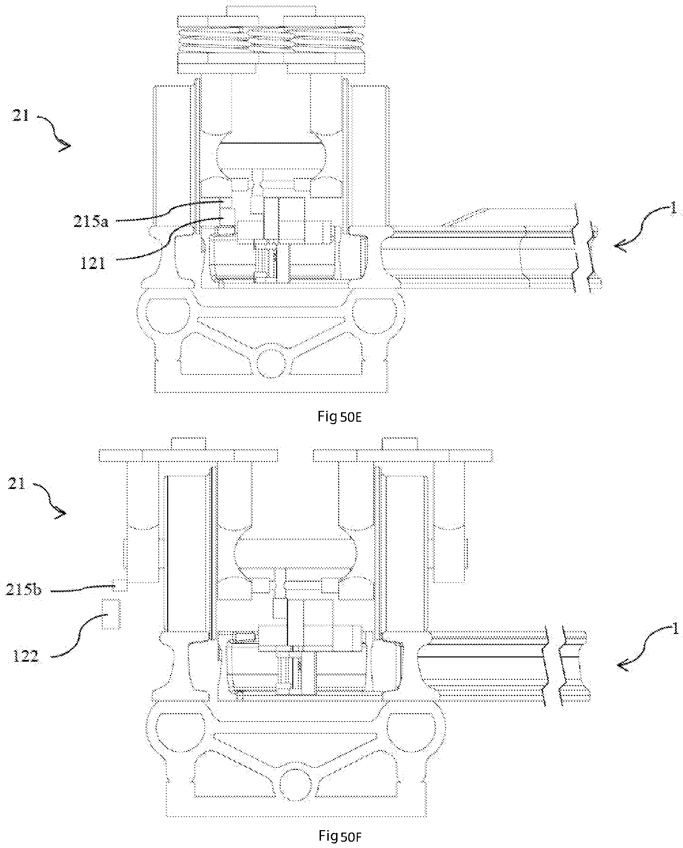

On the basis of the structure of the vehicle-mounted track change system in any of the above Example 4 and Example 5, as shown in FIG. 50C and FIG. 50E, the bogie 21 further comprises a collector shoe 215a, as shown in FIGS. 43-45, the fixed turnout track 1 further comprises a conductive rail 121. The conductive rail 121 is arranged inside the fixed turnout track 1 and is parallel to the fixed turnout track 1, the collector shoe 215a is arranged on the frame of the bogie 21 and is adapted to cooperate with the conductive rail 121; a height of an upper surface of the conductive rail 121 is higher than the upper rail surfaces of the fixed turnout track 1, the conductive rail 121 comprises a conductive cable (not shown in the figures), and the conductive rail 121 is disconnected at the crossing and two disconnected ends of the conductive rail 121 are connected by the conductive cable beneath the fixed turnout track 1. The collector shoe 215a obtains electricity via the conductive rail 121 and supplies the electricity to the rail vehicle 2. In addition, the collector shoe 215a and the conductive rail 121 are both located relatively at the inner side of the fixed turnout track, which can save the total width between the rails and save space.

### Example 8

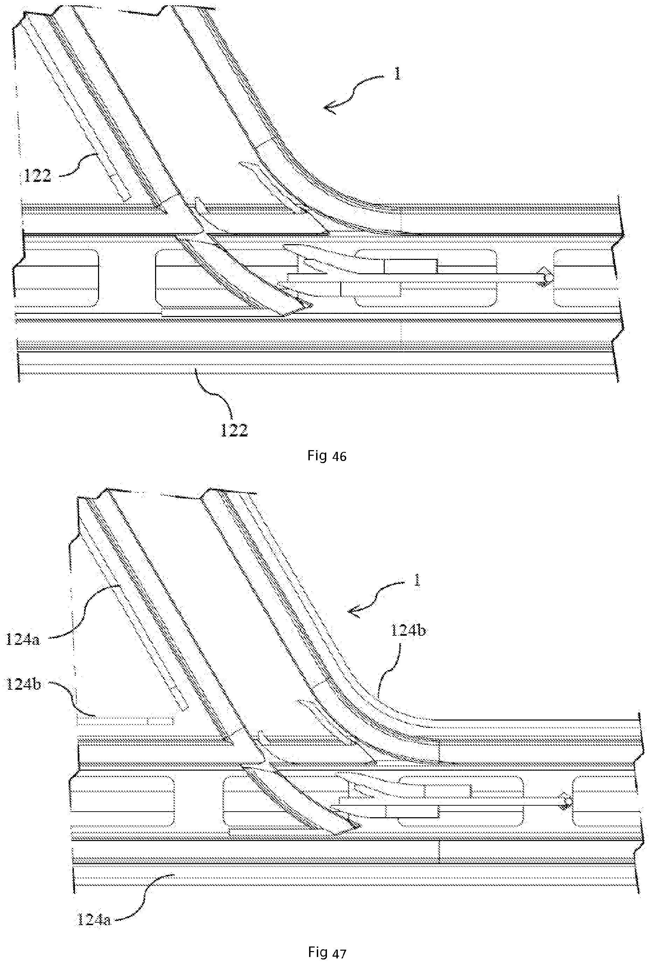

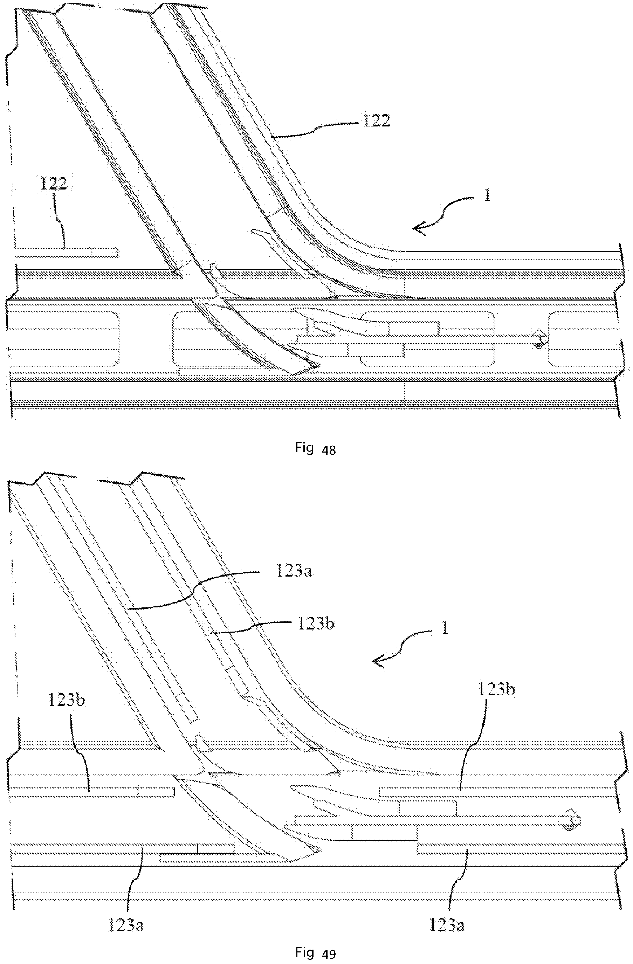

On the basis of the structure of the vehicle-mounted track change system in any of the above Example 4 and Example 5, as shown in FIG. 50D and FIG. 50F, the bogie 21 further comprises a collector shoe 215b, as shown in FIGS. 46 and 48, the fixed turnout track 1 further comprises a conductive rail 122. The conductive rail 122 is arranged outside the fixed turnout track 1 and is parallel to the fixed turnout track 1, the collector shoe 215b is arranged on the vehicle body 41 and is adapted to cooperate with the conductive rail 122; a height of an upper surface of the conductive rail 122 is higher than the upper rail surfaces of the fixed turnout track 1, the conductive rail 122 comprises a conductive cable (not shown in the figures), and the conductive rail 122 is disconnected at the crossing and two disconnected ends of the conductive rail 122 are connected by the conductive cable beneath the fixed turnout track 1. The collector shoe 215b obtains electricity via the conductive rail 122 and supplies the electricity to the rail vehicle 2. In addition, the collector shoe 215b and the conductive rail 122 are both located relatively at the outside of the fixed turnout track, which can reduce the disconnection frequency of the conductive rail at the crossing, thereby improving the continuity of power supply.

### Example 9

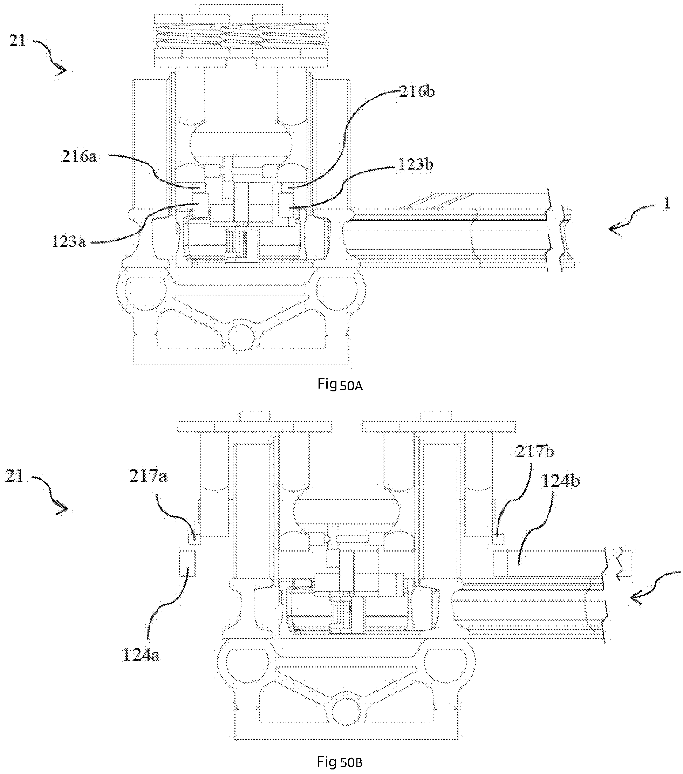

On the basis of the structure of the vehicle-mounted track change system in any one of the above Example 4 and Example 5, as shown in FIG. 50A, the bogie 21 further comprises: a first collector shoe 216a and a second collector shoe 216b, as shown in FIG. 49, the fixed turnout track 1 further comprises: a first conductive rail 123a and a second conductive rail 123b. The first conductive rail 123a is arranged at one inner side of the fixed turnout track 1 and is parallel to the fixed turnout track 1, and the second conductive rail 123b is arranged at the other inner side of the fixed turnout track 1 and is parallel to the fixed turnout track 1. The first collector shoe 216a is arranged on the frame of the bogie 21 and is adapted to cooperate with the first conductive rail 123a, and the second collector shoe 216b is arranged on the frame of the bogie 21 and is adapted to cooperate with the second conductive rail 123b. A height of an upper surface of the first conductive rail 123a and a height of the second conductive rail 123b are higher than the upper rail surfaces of the fixed turnout track 1. The first conductive rail 123a comprises a first conductive cable (not shown in the figures), the first conductive rail 123a is disconnected at the crossing and two disconnected ends of the first conductive rail 123a are connected by the first conductive cable beneath the fixed turnout track 1. The second conductive rail 123b comprises a second conductive cable (not shown in the figures), the second conductive rail 123b is disconnected at the crossing and two disconnected ends of the second conductive rail 123b are connected by the second conductive cable beneath the fixed turnout track 1. The first collector shoe 216a takes electricity through the first conductive rail 123a, and the second collector shoe 216b takes electricity through the second conductive rail 123, so as to supply the electricity to the rail vehicle 2. In addition, the first collector shoe 216a and the second collector shoe 216b, as well as the first conductive rail 123a and the second conductive rail 123b are all located relatively inside the fixed turnout track, which can save the total width between the rails and save space.

### Example 10

On the basis of the structure of the vehicle-mounted track change system in any one of the above Example 4 and Example 5, as shown in FIG. 50B, the bogie 21 further comprises: a first collector shoe 217a and a second collector shoe 217b, as shown in FIG. 47, the fixed turnout track 1 further comprises: a first conductive rail 124a and a second conductive rail 124b. The first conductive rail 124a is arranged at one outer side of the fixed turnout track 1 and is parallel to the fixed turnout track 1, and the second conductive rail 124b is arranged at the other outer side of the fixed turnout track 1 and is parallel to the fixed turnout track 1. The first collector shoe 217a is arranged on the vehicle body 41 and is adapted to cooperate with the first conductive rail 124a, and the second collector shoe 217b is arranged on the vehicle body 41 and is adapted to cooperate with the second conductive rail 124b. A height of an upper surface of the first conductive rail 124a and a height of the second conductive rail 124b are higher than the upper rail surfaces of the fixed turnout track 1. The first conductive rail 124a comprises a first conductive cable (not shown in the figures), the first conductive rail 124a is disconnected at the crossing and two disconnected ends of the first conductive rail 124a are connected by the first conductive cable beneath the fixed turnout track 1. The second conductive rail 124b comprises a second conductive cable (not shown in the figures), the second conductive rail 124b is disconnected at the crossing and two disconnected ends of the second conductive rail 124b are connected by the second conductive cable beneath the fixed turnout track 1. The first collector shoe 217a takes electricity through the first conductive rail 124a, and the second collector shoe 217b takes electricity through the second conductive rail 124, so as to supply the electricity to the rail vehicle 2. In addition, the first collector shoe 217a and the second collector shoe 217b, as well as the first conductive rail 124a and the second conductive rail 124b are all located relatively outside the fixed turnout track, which can reduce the disconnection frequency of the conductive rail at the crossing, thereby improving the continuity of power supply.

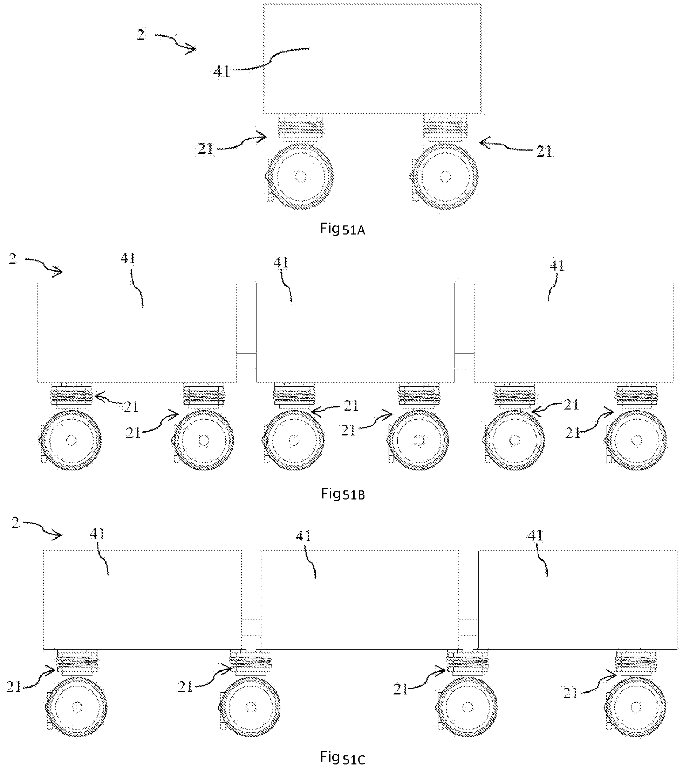

It can be understood that, in any of the examples 4-10, the vehicle body 41 can be single carriage, as shown in FIG. 51A, and the bogies 21 are arranged at a front bottom and a rear bottom of the carriage, respectively. Therefore, the single carriage is more flexible when the passenger flow is not very large, which is conducive to the popularization of the new rail transit personal rapid transit (PRT) system.

It can be understood that, in any of the Examples 4-10, the vehicle body 41 can also be a plurality of carriages, as shown in FIG. S 1B, the plurality of carriages are hinged end to end with one another, and the bogies 21 are arranged at a front bottom and a rear bottom of each of the plurality of carriages, respectively. Therefore, the plurality of carriages can increase the transport capacity when the passenger flow is large, and in addition, it is easy to realize free and flexible marshaling.

It can be understood that in any of the Examples 4-10, the vehicle body 41 can also a plurality of carriages in another connection mode, but this method is not easy to achieve flexible marshaling, as shown in FIG. 51C, the plurality of carriages are hinged end to end with one another, and the bogies 21 are arranged at a front bottom of a first carriage, a bottom of a hinge portion of every adjacent carriages, and a rear bottom of a last carriage, respectively. Therefore, the plurality of carriages can increase the transport capacity when the passenger flow is large.

In a further optimization scheme in any one of Examples 4-10, as shown in FIG. 36-FIG. 38, the steering part 214 further comprises a steering pulley 2143, and the steering pulley 2143 is installed at a lower part of the steering rod 2142, and a lowest point of a lower part of the steering pulley 2143 is higher than the upper rail surfaces of the fixed turnout track 1 and lower than a highest surface of the branch guide rail 11. Thus, the steering pulley 2143 can effectively reduce the direct frictional force between the steering rod 2142 and the branch guide rail 11, and prevent the steering rod 2142 from suffering excessive friction damage.

### Example 11

On the basis of the structure of the vehicle-mounted track change system described in any of the Examples 4-10, as shown in FIGS. 15-19, 52, and 60-66, the rail vehicle 2 further comprises an anti-derailment device 31, the anti-derailment device 31 is arranged at a bottom of the vehicle body 41 (not shown in the figures), and the anti-derailment device 31 is adapted to cooperate with the fixed turnout track 1. It can be understood that the anti-derailment device 31 mainly prevents the rail vehicle 2 from rolling over and derailing. The rail vehicle 2 is not easy to derail when travelling at high speed, so that the safe travelling speed of the rail vehicle 2 can be improved, and the rail vehicle can even travel at high speed when turning or climbing up and down slopes.

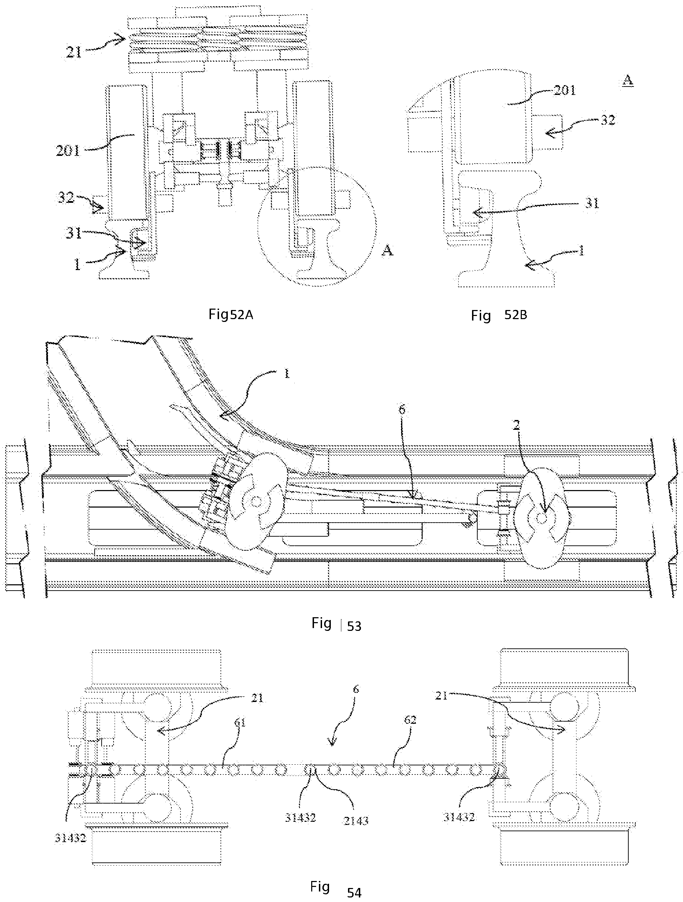

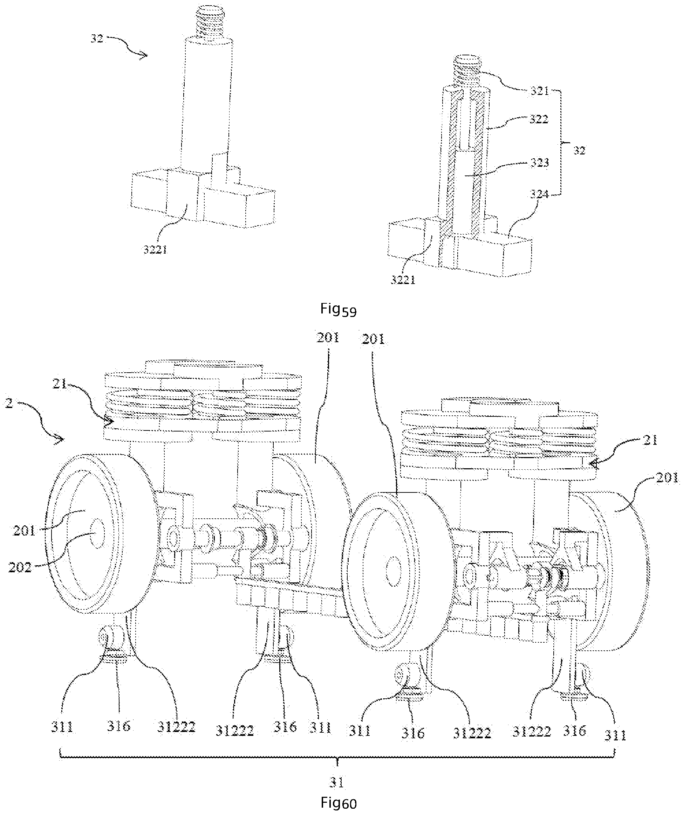

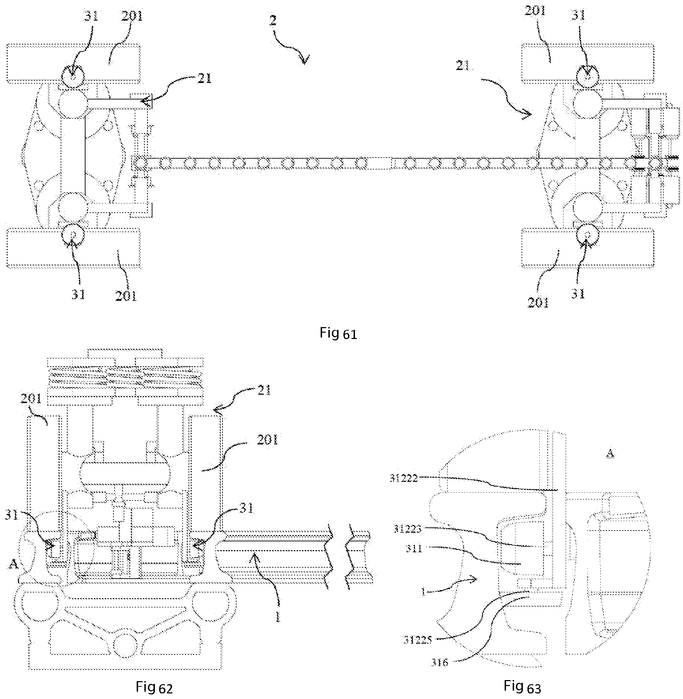

Specifically, as shown in FIGS. 60-66, the anti-derailment device 31 comprises an inverted hanging pulley 311 and a support flat arm 31222, and one side of the support flat arm 31222 is provided with an inverted hanging pulley axel 31223 and faces an inner side edge of an adjacent rail of the fixed turnout track 1, the inverted hanging pulley 311 is installed at the inverted hanging pulley axel 31223, as shown in FIG. 62, the anti-derailment device 31 is arranged under the bogie 21 and close to a corresponding wheel 201. It can be understood that as the anti-derailment device 31 is arranged under the bogie 21 and close to the corresponding wheel, the rail vehicle 2 can be prevented from further inclination, rollover, and derailment risks, that is, as shown in FIG. 52A, FIG. 52B, FIG. 6, and FIG. 63, if one side of the rail vehicle 2 is inclined upward during travelling, the inverted hanging pulley 311 on the corresponding side will press against an upper surface of the inner recess of the fixed turnout track 1, and the inverted hanging pulley 311 on the corresponding side will subjected to a downward force from the upper surface of the inner recess of the fixed turnout track 1, thereby preventing the rail vehicle 2 from further inclination, rollover, and derailment. In this example, the flange of the wheel 201 of the rail vehicle 2 is optional, and not limited herein, which does not affect the implementation of this example. If the wheel 201 does not have a wheel flange, the support flat arm 31222 may also function as a wheel flange. As the support flat arm 31222 can also be used as a wheel flange, the function of the wheel flange is to prevent the wheel 201 from deviating from the rails. If the wheel 201 has a wheel flange, the support flat arm 31222 mainly functions in inverted hanging and supporting once inclination and rolling over of the rail vehicle 2 occurs, whereby preventing the rail vehicle from rolling over and derailment. Those skilled in the art can easily understand that the flangeway as described in the above Example 1 does not limit that the wheel 201 must have a wheel flange. In some embodiments, such as Example 11, the wheel 201 may not have a wheel flange, in such condition, the support flat arm 31222 can also functions as a wheel flange, and the flangeway as described in the above Example 1 can allow the support flat arm 31222 to pass through the turnout smoothly.

In Example 11, as shown in FIG. 60 and FIG. 61, each bogie 21 of the rail vehicle 2 is respectively provided with a pair of the anti-derailment devices 31, that is to say, each bogie 21 is provided with anti-derailment devices 31 next to a left wheel and a right wheel, respectively. Thus, no matter which side wheel rolls over, the inverted hanging pulley 311 on the corresponding side will press against an upper surface of the inner recess of the fixed turnout track 1, and the inverted hanging pulley 311 on the corresponding side will subjected to a downward force from the upper surface of the inner recess of the fixed turnout track 1, thereby preventing the rail vehicle 2 from further inclination, rollover, and derailment. Those skilled in the art can easily understand that in Example 11, in the specific embodiment in which the vehicle body 41 is a plurality of carriages, the number of bogies 21 of the rail vehicle 2 will be greater than 2, and in such condition, it is not necessary for all the bogies 21 to be provided with a pair of anti-derailment devices 31, for example, every two bogies may be provided with one pair of the anti-derailment devices 31, and the like.

In a further scheme in Example 11, as shown in FIG. 60 and FIG. 63, in order to prevent the side of the inverted hanging pulley 311 from frictional damage to the inner wall of the fixed turnout track 1, or to reduce the frictional loss between the support flat arm 31222 and the inner wall of the fixed turnout track 1, or to prevent the wheels 201 from deviating from the rail surface of the fixed turnout track 1, the anti-derailment device 31 further comprises a side guide pulley 316, and a lower end of the support flat arm 31222 is provided with a side guide pulley axel 31225 extending downward, the side guide pulley 316 is installed at the side guide pulley axel 31225. During the travelling of the rail vehicle 2, the side guide pulley 316 is capable of being in rolling fit with an inner side wall of the fixed turnout track 1. In addition, the side guide pulley 316 can also play a role in guiding the wheels 201 to advance along the rails, and prevent the wheels 201 from deviating from the travelling rails.

### Example 12

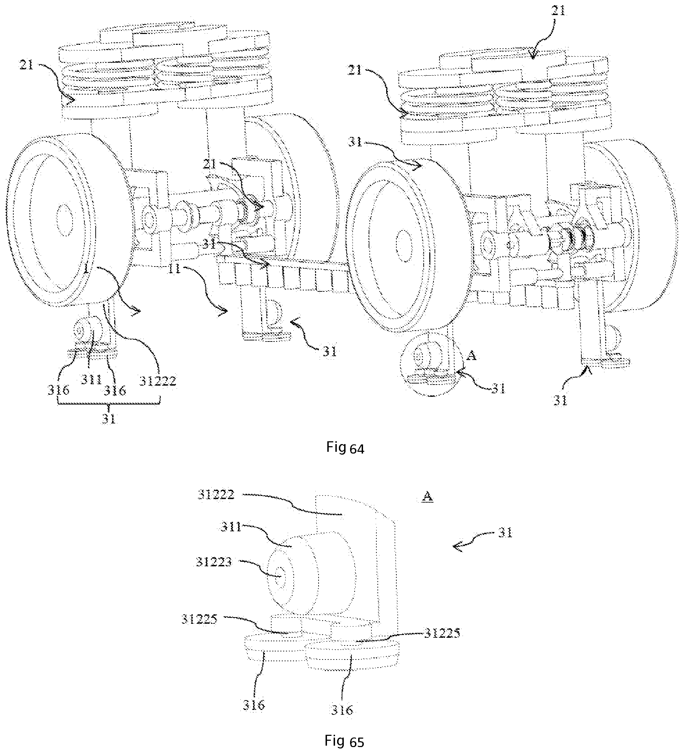

Example 12 is different from the vehicle-mounted track change system described in Example 11 as follows: as shown in FIGS. 64-65, two side guide pulleys 316 are arranged at two sides of each anti-derailment device 31 of the bogie 21 of the rail vehicle 2, respectively. The two side guide pulleys 316 are installed at a front side and a rear side of the side guide pulley axel 31225, respectively, and other structures are completely the same as those of the above Example 11. It can be understood that two side guide pulleys 316 are arranged beside each of the wheels on the left and right sides of each bogie 21, which can stabilize the wheels of the bogie 21 and prevent the wheels from swinging left and right.

### Example 13

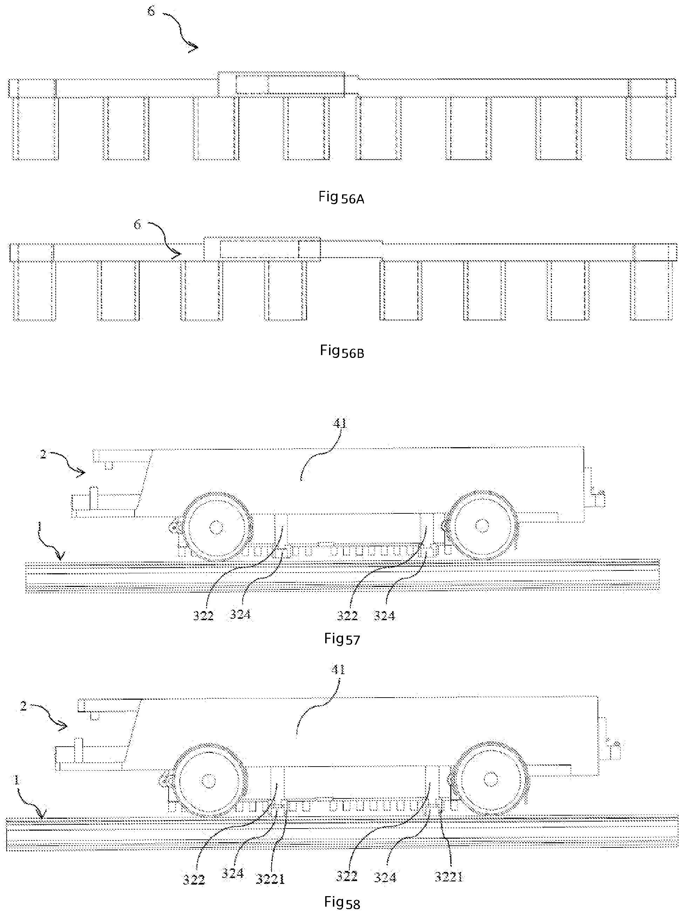

When the rail vehicle 2 is going straight or turning at the railway turnout, the sliders 2141 of the two bogies 21 at the front and the rear of the vehicle body 41 may not be at the same side because of malfunctions, such that one of the two bogies 21 fails to advance according to the predetermined route and the front and rear wheelsets of the rail vehicle 2 advance in two different directions, resulting in disintegration accident. In order to prevent the occurrence of such accidents, as shown in FIG. 53, FIG. 54, and FIG. 55, on the basis of the structure of the vehicle-mounted track change system as described in any of the above Examples 4-10, the rail vehicle 2 further comprises a safety linkage mechanism 6, the rail vehicle 2 comprises two bogies 21, and the two bogies 21 are arranged at a front bottom and a rear bottom of the vehicle body 41, respectively; the safety linkage mechanism 6 comprises a front linkage bar 61 and a rear linkage bar 62, one end of the front linkage bar 61 is in rotatable connection with the slider 2141 of the steering part 214 of the bogie 21 at the front bottom of the vehicle body 41, one end of the rear linkage bar 62 is in rotatable connection with the slider 2141 of the steering part 214 of the bogie 21 at the rear bottom of the vehicle body 41, and the other end of the front linkage bar 61 and the other end of the rear linkage bar 62 overlap with each other to form a parallel and telescopic connection. Those skilled in the art can easily understand that when the rail vehicle 2 is travelling on a non-straight road section, a linear distance between the sliders 2141 of the bogies 21 at the front and the rear always changes dynamically. Therefore, the other end of the front linkage bar 61 is connected to the other end of the rear linkage bar 62 must overlap with each other to form the parallel and telescopic connection, which can be realized by various mays, for example, the other end of the bar 61 is hollow, while the other end of the rear linkage bar 62 is solid, the hollow part of the other end of the front linkage bar 61 is nested outside the solid part of the other end of the rear linkage bar 62 to form a slidable connection, as shown in FIG. 56A, which is a retracted state, and FIG. 56B, which is a stretched state. As shown in FIG. 54, a plurality of guide rods 31432 are arranged at intervals below the front linkage bar 61 and the rear linkage bar 62, and a lowest point of the lower end of the guide rods 31432 is higher than upper rail surfaces of the fixed turnout track 1 and lower than the highest surface of the branch guide rail 11. Thus, during the advancing process of the rail vehicle 2, if the sliders 2141 of bogies 21 at the front and the rear of the vehicle body 41 are not on the same side due to malfunctions, the plurality of guide rods 31432 of the safety linkage mechanism 6 will force the slider 2141 of the bogie 21 at the rear of the vehicle body 41 to be at the same side as the slider 2141 of the bogie 21 at the front of the vehicle body 41 one by one, respectively, under the action of the corresponding guide rail part of the branch guide rail 11, so that the overall steering of the rail vehicle 2 can only be performed by the slider 2141 of bogie 21 at the front of the vehicle body 41. That is, no matter which one or both of the bogies 21 at the front and the rear fails, the rail vehicle 2 will only advance along the route determined by the slider 2141 of the bogie 21 at the front, thereby preventing the front and rear wheelsets of the rail vehicle 2 from disintegration along two different directions or derailment.

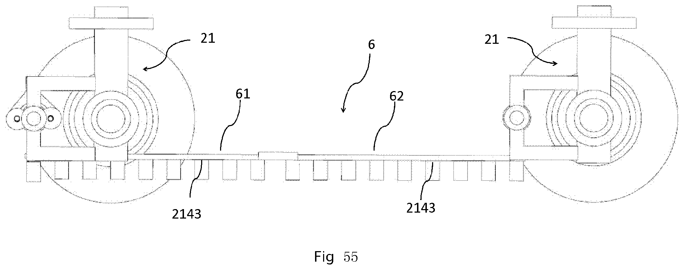

In Example 13, as shown in FIG. 54 and FIG. 55, the steering pulley 2143 is installed at a lower part of the steering rod 2142, and a lowest point of the lower part of the steering pulley 2143 is higher than the upper rail surfaces of the fixed turnout track 1 and lower than a highest surface of the branch guide rail 11. Thus, the steering pulley 2143 can effectively reduce the direct frictional force between the steering rod 2142 and the branch guide rail 11, and prevent the steering rod 2142 from suffering excessive friction damage.

### Example 14

As shown in FIG. 57, FIG. 58 and FIG. 59, on the basis of the structure of the vehicle-mounted track change system as described in any of the above Examples 11-13, the rail vehicle 2 further comprises an emergency brake assembly 32, and the emergency brake assembly is fixedly installed under the vehicle body. As being the emergency brake assembly, that is to say, the emergency brake assembly 32 will be activated only in an emergency situation. Under normal circumstances, the rail vehicle 2 uses a conventional braking assembly to complete the braking.

Specifically, as shown in FIG. 59, the emergency brake assembly 32 comprises a movable body 323, a brake device (not shown in the figures), a brake cylinder 322, a brake friction block 324, and a return spring 321, the movable body 323 is nested within and up-down slidable inside the brake cylinder 322 and is driven by the brake device. An upper part of the movable body 323 is higher than an upper part of the brake cylinder 322. A return spring 321 is connected between the upper part of the movable body 322 and the upper part of the brake cylinder 322, and the brake friction block 324 is fixedly arranged under the movable body 323. As shown in FIG. 73, during braking, the brake friction block 324 is driven by the brake device to move down to a rail surface of the fixed turnout track 1 for friction braking. In case of an emergency, a braking distance of the traditional wheel braking method is longer, and the addition of the emergency brake assembly 32 can effectively shorten the braking distance, thereby enhancing driving safety.

In Example 14, the brake device adopts hydraulic braking, where a brake fluid can be directly communicated with the brake cylinder 322, and the brake cylinder 322 becomes a part of the brake device, or the brake device can be integrally installed above the movable body 323.

In an optional scheme in Example 14, the brake device adopts air-pressure braking, where a brake gas can be directly communicated with the brake cylinder 322, and the brake cylinder 322 becomes a part of the brake device, or the brake device can be integrally installed above the movable body 323.

In another optional scheme in Example 14, the brake device adopts mechanical braking, where the brake device is integrally installed above the movable body 323.

In a further scheme in Example 14, in order to protect the brake friction block 324 from deformation when rubbing against the rail surface of the fixed turnout track 1, as shown in FIG. 58 and FIG. 59, the emergency brake assembly 32 further comprises a brake friction block guard 3221, and the brake friction block guard 3221 is fixedly installed under the brake cylinder 322. A lower end surface of the brake friction block guard 3221 is higher than a lower end surface of the brake friction block 324, and the brake friction block 324 is movably sleeved in the brake friction block guard 3221. Thus, when the brake friction block 324 rubs against the rail surface of the fixed turnout track 1, the brake friction block 324 will generate a backward friction force, and most of the top of the brake friction block 324 is confined in the brake friction block guard body 3221, thereby protecting the brake friction block 324 from the entire backward deformation and improving the service life of the brake friction block 324.

### Example 15

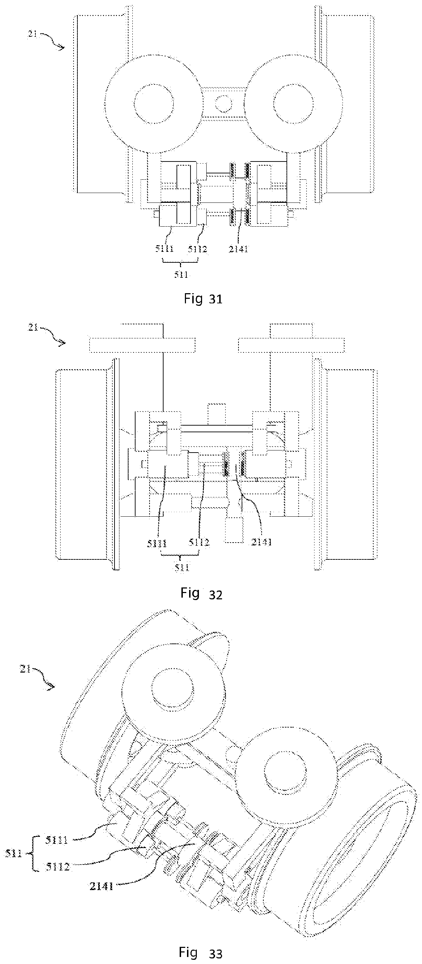

When the rail vehicle 2 is going straight or turning at the railway turnout, the sliders 2141 of the two bogies 21 at the front and the rear of the vehicle body 41 may not be at the same side because of malfunctions, such that one of the two bogies 21 fails to advance according to the predetermined route and results in disintegration or derailment accident of the rail vehicle. In order to prevent the occurrence of such accidents, on the basis of the structure of the vehicle-mounted track change system as described in any of the above Examples 4-10, as shown in FIGS. 31-35, the rail vehicle 2 further comprises a hydraulic interlock mechanism 51. The hydraulic interlock mechanism comprises hydraulic cylinders 511 and hydraulic pipes 512. Each of the hydraulic cylinders 511 comprises a hydraulic cylinder body 5111 and a hydraulic piston 5112, and the hydraulic piston 5112 is movably nested in the hydraulic cylinder body 5111. The hydraulic cylinders 511 comprise: a first front hydraulic cylinder 511a, a second front hydraulic cylinder 511b, a first rear hydraulic cylinder 511c, and a second rear hydraulic cylinder 511d. The hydraulic pipes 512 comprise: a first hydraulic pipe 512a and a second hydraulic cylinder pipe 512b. The bogies 21 are arranged at the front bottom and the rear bottom of the vehicle body 41, of the rail vehicle 2, respectively. The first front hydraulic cylinder 511a and the second front hydraulic cylinder 511b are symmetrically installed at two ends of the steering crossbeam 213 of the track change device at the front bottom of the vehicle body 41, and the first rear hydraulic cylinder 511c and the second rear hydraulic cylinder 511d are symmetrically installed at two ends of the steering crossbeam 213 of the track change device at the rear bottom of the vehicle body 41. One end of the first hydraulic pipe 512a is connected to a bottom of the first front hydraulic cylinder 511a, the other end of the first hydraulic pipe 512a is connected to a bottom of the second rear hydraulic cylinder 511d. One end of the second hydraulic pipe 512b is connected to a bottom of the second front hydraulic cylinder 511b, the other end of the second hydraulic pipe 512b is connected to a bottom of the first rear hydraulic cylinder 511c. Two sides of the slider 2141 of the steering part 214 of the track change device at the front bottom of the vehicle body 41 are in fixed connection with one end of the hydraulic piston 5112 of the first front hydraulic cylinder 511a and one end of the hydraulic piston 5112 of the second front hydraulic cylinder 511b, respectively. Two sides of the slider 2141 of the steering part 214 of the track change device at the rear bottom of the vehicle body 41 are in fixed connection with one end of the hydraulic piston 5112 of the first rear hydraulic cylinder 511c and one end of the hydraulic piston 5112 of the second rear hydraulic cylinder 511d, respectively.

The principle of the hydraulic interlock mechanism is summarized as follows. As shown in FIG. 34, since the first hydraulic pipe 512a is connected between the first front hydraulic cylinder 511a and the second rear hydraulic cylinder 511d and is filled with a liquid, if the first front hydraulic cylinder 511a is in an expanded state, then the second rear hydraulic cylinder 511d must be in a compressed state; similarly, since the second hydraulic pipe 512b is connected between the second front hydraulic cylinder 511b and the first rear hydraulic cylinder 511c and is filled with a liquid, if the second front hydraulic cylinder 511a is in a compressed state, then the first rear hydraulic cylinder 511c must be in an expanded state. Moreover, due that the two sides of the slider 2141 of the steering part 214 of the track change device at the front bottom of the vehicle body 41 are in fixed connection with one end of the hydraulic piston 5112 of the first front hydraulic cylinder 511a and one end of the hydraulic piston 5112 of the second front hydraulic cylinder 511b, respectively, and the two sides of the slider 2141 of the steering part 214 of the track change device at the rear bottom of the vehicle body 41 are in fixed connection with one end of the hydraulic piston 5112 of the first rear hydraulic cylinder 511c and one end of the hydraulic piston 5112 of the second rear hydraulic cylinder 511d, respectively, in this way, that is, the states of the first front hydraulic cylinder 511a and the first rear hydraulic cylinder 511c are always the same, the states of the second front hydraulic cylinder 511b and the second rear hydraulic cylinder 511d are always the same. In case of malfunctions of the power device, the sliders 2141 of bogies 21 at the front and the rear of the vehicle body 41 can always be kept on the same side, thereby preventing the front and rear wheelsets of the rail vehicle 2 from disintegration along two different directions or derailment.

Preferably, each of the first front hydraulic cylinder 511a, the second front hydraulic cylinder 511b, the first rear hydraulic cylinder 511c, and the second rear hydraulic cylinder 511d is constructed to be two groups, respectively. Each of two ends of both the first hydraulic pipe 512a and the second hydraulic pipe 512a is provided with two ports. The two ports at one end of the first hydraulic pipe 512a are connected to bottoms of the two groups of first front hydraulic cylinders 511a, respectively, and the two ports at the other end of the first hydraulic pipe 512a are connected to bottoms of the two groups of second rear hydraulic cylinders 511d.The two ports at one end of the second hydraulic pipe 512a are connected with bottoms of the two groups of second front hydraulic cylinders 511b, respectively, and the two ports at the other end of the second hydraulic pipe 512a are connected with bottoms the two groups of the first rear hydraulic cylinder 511c, respectively. In this way, each of the first front hydraulic cylinder 511a, the second front hydraulic cylinder 511b, the first rear hydraulic cylinder 511c, and the second rear hydraulic cylinder 511d is constructed to be two groups, respectively, such that the structural stability of the hydraulic interlock mechanism 51 and performance reliability can be enhanced.

The above is only specific embodiments of the present application, but the scope of protection of the present application is not limited thereto. Those of ordinary skill in the art can understand that various changes, modifications, substitutions and variations can be made to these embodiments, without departing from the principle and purpose of the present application. The scope of the present application is defined by the claims and their equivalents.

## Claims

1. A fixed turnout track, comprising:
a turnout structure, the turnout structure comprising main rails and branch rails; wherein:
the main rails comprise a first main rail and a second main rail, and the branch rails comprise a first branch rail and a second branch rail; and
the second main rail and the first branch rail are fixedly intersected at a crossing, and are provided with a flangeway along an inner edge direction of the second main rail and a flangeway along an inner edge direction of the first branch rail at an intersection, respectively; the first main rail is intersected with one end of the first branch rail at the crossing and is provided with a flangeway along an inner edge direction of the first main rail at an intersection; the second main rail is intersected with one end of the second branch rail at the crossing and is provided with a flangeway along an inner edge direction of the second branch rail at an intersection; and
a branch guide rail configured for guiding a rail vehicle to travel through a turnout, wherein:
the branch guide rail is arranged in the turnout structure, a top of the branch guide rail protrudes from upper surfaces of main rails and upper surfaces of branch rails; one side of the branch guide rail is defined as a first side guide rail part, and the other side of the branch guide rail is defined as a second side guide rail part; an end of the first side guide rail part is arranged adjacent to a side of the first branch rail at an interval, and a guiding direction of the first side guide rail part extends along a direction of the first main rail; an end of the second side guide rail part is arranged adjacent to a side of the second main rail at an interval; and a guiding direction of a front end of the second side guide rail part extends along a direction of the second main rail, and a guiding direction of a rear end of the second side guide rail part extends along a direction of the second branch rail.

2. The fixed turnout track according to claim 1, wherein the first main rail is located at a left side of the main rails, the second main rail is located at a right side of the main rails, the first branch rail is located at a left side of the branch rails, and the second branch rail is located at a right side of the branch rails.

3. The fixed turnout track according to claim 1, wherein the first main rail is located at a right side of the main rails, the second main rail is located at a left side of the main rails, the first branch rail is located at a right side of the branch rails, and the second branch rail is located at a left side of the branch rails.

4. The fixed turnout track according to claim 1, wherein the first main rail and the first branch rail are integrated together at a bottom of the flangeway at the intersection therebetween.

5. The fixed turnout track according to claim 1, wherein the second main rail and the second branch rail are integrated together at a bottom of the flangeway at the intersection therebetween.

6. The fixed turnout track according to claim 1, wherein a steering pulley protection slope of the first side guide rail part is arranged next to a lower part of the first side guide rail part of the branch guide rail, a slope top of the steering pulley protection slope of the first side guide rail part is arranged close to a side of a rear end of the first side guide rail part; and a steering pulley protection slope of the second side guide rail part is arranged next to a lower part of the second side guide rail part of the branch guide rail, a slope top of the steering pulley protection slope of the second side guide rail part is arranged close to a side of a rear end of the second side guide rail part.

7. The fixed turnout track according to claim 6, wherein the slope top of the steering pulley protection slope of the first side guide rail part protrudes from upper surfaces of adjacent rails, and the slope top of the steering pulley protection slope of the second side guide rail part protrudes from upper surfaces of adjacent rails.

8. The fixed turnout track according to claim 1, wherein
a front end of the branch guide rail is provided with a collision guide pulley assembly, and the collision guide pulley assembly comprises: a support shaft, a guide pulley rotatably mounted on a top of the support shaft, and a support shaft base; the support shaft base is divided into a first base region and a second base region; the first base region is fixed at a lower part of the front end of the branch guide rail, the second base region protrudes from the front end of the branch guide rail, and a lower part of the support shaft is installed at the second base region and is arranged at a front end of the branch guide rail; and the front end of the branch guide rail is a concave structure, which is in clearance fit with the guide pulley.

9. The fixed turnout track according to claim 8, wherein a lower part of the support shaft is arranged at a front end of the second base region of the support shaft base.

10. The fixed turnout track according to claim 8, wherein the support shaft base is provided with:
a micromotion spring receiving hole, wherein, one end of the micromotion spring receiving hole is closed and ends at a second rear of the second base region, in which, the second rear of the second base region is close to the second side guide rail part of the branch guide rail, and the other end of the micromotion spring receiving hole is opened and an opening extends toward the lower part of the support shaft;
a support shaft micromotion spring, wherein, the support shaft micromotion spring is sleeved in the micromotion spring receiving hole, one end of the support shaft micromotion spring is fixed at the closed end of the micromotion spring receiving hole, and the other end of the support shaft micromotion spring is fixed at the lower part of the support shaft;
a micromotion support swing arm shaft, wherein, the micromotion support swing arm shaft is fixed at a first rear of the second base region, in which, the first rear of the second base region is close to the first side guide rail part of the branch guide rail; and
micromotion support swing arms, wherein, two micromotion support swing arms are provided; one micromotion support swing arm has one end being fixed at the support shaft close to a bottom of the guide pulley, and the other end being rotatably mounted on an upper part of the micromotion support swing arm shaft; the other micromotion support swing arm has one end being fixed at the support shaft away from the bottom of the guide pulley, and the other end being rotatably mounted on a lower part of the micromotion support swing arm shaft; and the guide pulley is capable of slightly swinging around the micromotion support swing arm under an action of an external force.

11. A vehicle-mounted track change system, comprising:
the fixed turnout track, which is the fixed turnout track according to any one of claims 1-10; and
a rail vehicle, wherein: the rail vehicle travels exclusively on the fixed turnout track; the rail vehicle comprises a vehicle body and bogies, and each bogie is installed at a bottom of the vehicle body; the bogie comprises: a wheelset assembly, a frame, and a track change device; the frame is installed at the wheelset assembly, the track change device is installed at the frame, and the track change device is adapted to cooperate with the branch guide rail of the fixed turnout track according to any one of claims 1-10 to guide the rail vehicle to enter the main rails or the branch rails through the turnout.

12. The vehicle-mounted track change system according to claim 11, wherein
the wheelset assembly comprises an axle and two wheels; the wheels are installed on the axle, and a forward direction of the wheels is always perpendicular to the axle;
the frame comprises a first semi-frame and a second semi-frame; the first semi-frame comprises a first support column and a first steering arm, and a front end of the first steering arm is in fixed connection with the first support column; the second semi-frame comprises a second support column and a second steering arm, and a front end of the second steering arm is in fixed connection with the second support column; both the first support column and the second support column are in lap joint with the axle; a support plate is fixed above the first support column and the second support column, and the bottom of the vehicle body is rotatably connected to the center of the support plate;
the track change device comprises: a steering crossbeam, a steering part, and a power device; both ends of the steering crossbeam are respectively fixed at a rear end of the first steering arm and a rear end of the second steering arm; a first side stopper and the second side stopper are arranged on the steering crossbeam, and the first side stopper and the second side stopper are symmetrical to a center of the steering crossbeam; a part between the first side stopper and the center of the steering crossbeam is defined as a first side moving part, and a part between the second side stopper and the center of the steering crossbeam is defined as a second side moving part; the steering part comprises a slider and a steering rod, the steering rod extends vertically downward, an upper end of the steering rod is in fixed connection with a lower part of the slider, the slider is slidably installed on the steering crossbeam and is adapted to move left and right along a length direction of the steering crossbeam within a range of the first side moving part and the second side moving part; the power device is connected with the slider; the power device is used to drive the slider to move left and right along the length direction of the steering crossbeam; and a lowest point of a lower end of the steering rod is higher than upper rail surfaces of the fixed turnout track and lower than a highest surface of the branch guide rail; and
before the rail vehicle reaches the branch guide rail, when the slider is located at the first side moving part in advance, the steering rod is blocked by the first side guide rail part of the branch guide rail, and cooperates with the track change device to force the rail vehicle to move forward along a main rail direction; and before the rail vehicle reaches the branch guide rail, when the slider is located at the second side moving part in advance, the steering rod is blocked by the second side guide rail part of the branch guide rail, and cooperates with the track change device to force the rail vehicle to move forward along a branch rail direction.

13. The vehicle-mounted track change system according to claim 12, wherein the wheels are installed at two ends of the axle, both the first support column and the second support column are in lap joint with the axle and close to inner sides of the corresponding wheels.

14. The vehicle-mounted track change system according to claim 12, wherein the wheels are installed at the axle and two ends of the axle protrude from the corresponding wheels, a first auxiliary support column is arranged beside the first support column, a second auxiliary support column is arranged beside the second support column, both the first auxiliary support column and the second auxiliary support column are in lap joint with the two ends of the axle, and both the first support column and the second support column are in lap joint with the axle and are close to inner sides of the corresponding wheels.

15. The vehicle-mounted track change system according to claim 12, wherein the wheels are installed at the axle and two ends of the axle protrude from the corresponding wheels, and both the first support column and the second support column are in lap joint with two ends of the axle.

16. The vehicle-mounted track change system according to any one of claims 12-14, wherein the first steering arm is located right beneath the first support column, and the second steering arm is located right beneath the second support column.

17. The vehicle-mounted track change system according to any one of claims 12-15, wherein the first steering arm is arranged directly in front of the first support column, and the second steering arm is located directly in front of the second support column.

18. The vehicle-mounted track change system according to claim 12, wherein two first steering arms are provided, front ends of the two first steering arms are fixed at an upper part and a lower part of the first support column, respectively, and rear ends of the two first steering arms are converged together; and two second steering arms are provided, front ends of the two second steering arms are fixed at an upper part and a lower part of the second support column, respectively, and rear ends of the two second steering arms are converged together.

19. The vehicle-mounted track change system according to claim 12, wherein the slider adopts a ring structure, the steering crossbeam adopts a cylindrical structure, and the slider is sleeved on the steering crossbeam.

20. The vehicle-mounted track change system according to claim 12, wherein the slider comprises a slider body, two slider axels, and four slider pulleys, the slider body is a cuboid, the two slider axels are perpendicularly installed at two ends of the slider body, respectively, and the four slider pulleys are installed at two ends of the two slider axels, respectively, the steering crossbeam is a planar structure and defines a downward rectangular opening in a center, the slider pulleys are capable of running on two sides of the rectangular opening in the steering crossbeam.

21. The vehicle-mounted track change system according to claim 12, wherein the slider comprises: a slider body, four slider axels, and eight slider pulleys; the slider body adopts an H-shaped structure, the four slider axels are perpendicularly installed at the four ends of the H-shaped structure of the slider body, respectively; the eight slider pulleys are respectively installed at two ends of the four slider axels, respectively; the steering crossbeam is a two-layer planar structure, the two-layer planar structure define a downward rectangular opening in a center of each layer, four slider pulleys arranged at an upper part of the H-shaped structure of the slider body are capable of running on two sides of the upper rectangular opening in the steering crossbeam; and four slider pulleys arranged at a lower part of the H-shaped structure of the slider body are capable of running on two sides of the lower rectangular opening in the steering crossbeam.

22. The vehicle-mounted track change system according to claim 12, wherein the steering part is provided with a stabilizing bar, and the stabilizing bar perpendicularly crosses and is fixedly arranged at a middle part of the steering rod, and is parallel to the steering crossbeam; a first stabilizing bar limiting structure is arranged beneath the rear end of the first steering arm, one end of the stabilizing bar is in slidable connection with the first stabilizing bar limiting structure; and a second stabilizing bar limiting structure is arranged beneath the rear end of the second steering arm, and the other end of the stabilizing bar is in slidable connection with the second stabilizing bar limiting structure.

23. The vehicle-mounted track change system according to claim 11, wherein
the wheelset assembly comprises an axle and two wheels; the wheels are installed on the axle, and a forward direction of the wheels is always perpendicular to the axle;
the frame comprises a first semi-frame and a second semi-frame; the first semi-frame comprises a first support column and a first steering arm, and a front end of the first steering arm is in fixed connection with the first support column; the second semi-frame comprises a second support column and a second steering arm, and a front end of the second steering arm is in fixed connection with the second support column; both the first support column and the second support column are in lap joint with the axle; a support plate is fixed above the first support column and the second support column, and the bottom of the vehicle body is rotatably connected to the center of the support plate;
the track change device comprises: a steering crossbeam, a steering part, and a power device; two ends of the steering crossbeam are installed at a rear end of a first steering arm and a rear end of the second steering arm, respectively; a first side stopper and the second side stopper are arranged on the steering crossbeam, and the first side stopper and the second side stopper are symmetrical to a center of the steering crossbeam; a part between the first side stopper and the center of the steering crossbeam is defined as a first side moving part, and a part between the second side stopper and the center of the steering crossbeam is defined as a second side moving part; the steering part comprises a slider and a steering rod, the steering rod extends vertically downward, an upper end of the steering rod is in fixed connection with a lower part of the slider; the slider is slidably installed on the steering crossbeam and is adapted to move left and right along a length direction of the steering crossbeam within a range of the first side moving part and the second side moving part; the power device comprises a horizontal power device and a longitudinal power device; the horizontal power device is connected with the slider and used to drive the slider to move left and right along the length direction of the steering crossbeam; the longitudinal power device is connected with the steering crossbeam and used to drive the steering crossbeam to move up and down; when the two ends of the steering crossbeam move down to a lowest point, a lowest point of a lower end of the steering rod is higher than upper rail surfaces of the fixed turnout track and lower than the highest surface of the branch guide rail;
wherein, before the rail vehicle reaches the branch guide rail, the two ends of the steering crossbeam are at the lowest points of the end of the first turning arm and the end of the second turning arm, when the slider is located at the first side moving part in advance, the steering rod is blocked by the first side guide rail part of the branch guide rail, and cooperates with the track change device to force the rail vehicle to move forward along a main rail direction; when the slider is located at the second side moving part in advance, the steering rod is blocked by the second side guide rail part of the branch guide rail, and cooperates with the track change device to force the rail vehicle to move forward along a branch rail direction;
wherein, when the rail vehicle is travelling on non-branched rails, the two ends of the steering crossbeam are capable of being kept at the lowest points of the first steering arm and the second steering arm, and the two ends of the steering crossbeam are capable of being moved up to a highest point as required.

24. The vehicle-mounted track change system according to claim 12, wherein the bogie further comprises a collector shoe, the fixed turnout track further comprises a conductive rail; the conductive rail is arranged inside the fixed turnout track and is parallel to the fixed turnout track, the collector shoe is arranged on the frame of the bogie and is adapted to cooperate with the conductive rail; and
a height of an upper surface of the conductive rail is higher than the upper rail surfaces of the fixed turnout track, the conductive rail comprises a conductive cable, and the conductive rail is disconnected at the crossing and two disconnected ends of the conductive rail are connected by the conductive cable beneath the fixed turnout track.

25. The vehicle-mounted track change system according to claim 12, wherein the bogie further comprises a collector shoe, the fixed turnout track further comprises a conductive rail; the conductive rail is arranged outside the fixed turnout track and is parallel to the fixed turnout track, the collector shoe is arranged on the vehicle body and is adapted to cooperate with the conductive rail; and
a height of an upper surface of the conductive rail is higher than the upper rail surfaces of the fixed turnout track, the conductive rail comprises a conductive cable, and the conductive rail is disconnected at the crossing and two disconnected ends of the conductive rail are connected by the conductive cable beneath the fixed turnout track.

26. The vehicle-mounted track change system according to claim 12, wherein
the bogie further comprises: a first collector shoe and a second collector shoe;
the fixed turnout track further comprises: a first conductive rail and a second conductive rail;
the first conductive rail is arranged at one inner side of the fixed turnout track and is parallel to the fixed turnout track, and the second conductive rail is arranged at the other inner side of the fixed turnout track and is parallel to the fixed turnout track; the first collector shoe is arranged on the frame of the bogie and is adapted to cooperate with the first conductive rail, and the second collector shoe is arranged on the frame of the bogie and is adapted to cooperate with the second conductive rail; and
a height of an upper surface of the first conductive rail and a height of the second conductive rail are higher than the upper rail surfaces of the fixed turnout track; the first conductive rail comprises a first conductive cable, the first conductive rail is disconnected at the crossing and two disconnected ends of the first conductive rail are connected by the first conductive cable beneath the fixed turnout track; and the second conductive rail comprises a second conductive cable, the second conductive rail is disconnected at the crossing and two disconnected ends of the second conductive rail are connected by the second conductive cable beneath the fixed turnout track.

27. The vehicle-mounted track change system according to claim 12, wherein
the bogie further comprises: a first collector shoe and a second collector shoe;
the fixed turnout track further comprises: a first conductive rail and a second conductive rail;
the first conductive rail is arranged at one outer side of the fixed turnout track and is parallel to the fixed turnout track, and the second conductive rail is arranged at the other outer side of the fixed turnout track and is parallel to the fixed turnout track; the first collector shoe is arranged on the vehicle body and is adapted to cooperate with the first conductive rail, and the second collector shoe is arranged on the vehicle body and is adapted to cooperate with the second conductive rail;
a height of an upper surface of the first conductive rail and a height of the second conductive rail are higher than the upper rail surfaces of the fixed turnout track; the first conductive rail comprises a first conductive cable, the first conductive rail is disconnected at the crossing and two disconnected ends of the first conductive rail are connected by the first conductive cable beneath the fixed turnout track; and the second conductive rail comprises a second conductive cable, the second conductive rail is disconnected at the crossing and two disconnected ends of the second conductive rail are connected by the second conductive cable beneath the fixed turnout track.

28. The vehicle-mounted track change system according to claim 11, wherein the vehicle body is a single carriage, and the bogies are arranged at a front bottom and a rear bottom of the carriage, respectively.

29. The vehicle-mounted track change system according to claim 11, wherein the plurality of carriages are hinged end to end with one another, and the bogies are arranged at a front bottom and a rear bottom of each of the plurality of carriages, respectively.

30. The vehicle-mounted track change system according to claim 11, wherein the vehicle body is a plurality of carriages, the plurality of carriages are hinged end to end with one another, and the bogies are arranged at a front bottom of a first carriage, a bottom of a hinge portion of every adjacent carriages, and a rear bottom of a last carriage, respectively.

31. The vehicle-mounted track change system according to claim 12 or 23, wherein the steering part further comprises a steering pulley, and the steering pulley is installed at a lower part of the steering rod, and a lowest point of a lower part of the steering pulley is higher than the upper rail surfaces of the fixed turnout track and lower than a highest surface of the branch guide rail.

32. The vehicle-mounted track change system according to claim 11, wherein the rail vehicle further comprises an anti-derailment device, the anti-derailment device is arranged at a bottom of the vehicle body, and the anti-derailment device is adapted to cooperate with the fixed turnout track.

33. The vehicle-mounted track change system according to claim 32, wherein the anti-derailment device comprises an inverted hanging pulley and a support flat arm, and one side of the support flat arm is provided with an inverted hanging pulley axel and faces an inner side edge of an adjacent rail of the fixed turnout track, the inverted hanging pulley is installed at the inverted hanging pulley axel, the anti-derailment device is arranged under the bogie and close to a corresponding wheel.

34. The vehicle-mounted track change system according to claim 33, wherein each bogie of the rail vehicle is respectively provided with a pair of the anti-derailment devices.

35. The vehicle-mounted track change system according to claim 33, wherein the anti-derailment device further comprises a side guide pulley, and a lower end of the support flat arm is provided with a side guide pulley axel extending downward, the side guide pulley is installed at the side guide pulley axel; and the side guide pulley is capable of being in rolling fit with an inner side wall of the fixed turnout track.

36. The vehicle-mounted track change system according to claim 35, wherein two side guide pulleys are arranged at two sides of each anti-derailment device of the bogie of the rail vehicle, respectively; and the two side guide pulleys are installed at a front side and a rear side of the side guide pulley axel, respectively.

37. The vehicle-mounted track change system according to claim 11, wherein the rail vehicle further comprises a safety linkage mechanism, the rail vehicle comprises two bogies, and the two bogies are arranged at a front bottom and a rear bottom of the vehicle body, respectively; the safety linkage mechanism comprises a front linkage bar and a rear linkage bar, one end of the front linkage bar is in rotatable connection with the slider of the steering part of the bogie at the front bottom of the vehicle body, one end of the rear linkage bar is in rotatable connection with the slider of the steering part of the bogie at the rear bottom of the vehicle body, and the other end of the front linkage bar and the other end of the rear linkage bar overlap with each other to form a parallel and telescopic connection; and a plurality of guide rods are arranged at intervals below the front linkage bar and the rear linkage bar, and a lowest point of the lower end of the guide rods is higher than upper rail surfaces of the fixed turnout track and lower than the highest surface of the branch guide rail.

38. The vehicle-mounted track change system according to claim 11, wherein the rail vehicle further comprises an emergency brake assembly, and the emergency brake assembly is fixedly installed under the vehicle body.

39. The vehicle-mounted track change system according to claim 38, wherein
the emergency brake assembly comprises a movable body, a brake device, a brake cylinder, a brake friction block, and a return spring, the movable body is nested within and up-down slidable inside the brake cylinder and is driven by the brake device; an upper part of the movable body is higher than an upper part of the brake cylinder; a return spring is connected between the upper part of the movable body and the upper part of the brake cylinder, and the brake friction block is fixedly arranged under the movable body; and during braking, the brake friction block is driven by the brake device to move down to a rail surface of the fixed turnout track for friction braking.

40. The vehicle-mounted track change system according to claim 39, wherein the brake device adopts hydraulic braking.

41. The vehicle-mounted track change system according to claim 39, wherein the brake device adopts air-pressure braking.

42. The vehicle-mounted track change system according to claim 39, wherein the brake device adopts mechanical braking.

43. The vehicle-mounted track change system according to any one of claims 39-42, wherein
the emergency brake assembly further comprises a brake friction block guard, and the brake friction block guard is fixedly installed under the brake cylinder; a lower end surface of the brake friction block guard is higher than a lower end surface of the brake friction block, and the brake friction block is movably sleeved in the brake friction block guard.

44. The vehicle-mounted track change system according to claim 12 or 23, wherein the rail vehicle further comprises a hydraulic interlock mechanism; the hydraulic interlock mechanism comprises hydraulic cylinders and hydraulic pipes; each of the hydraulic cylinders comprises a hydraulic cylinder body and a hydraulic piston, and the hydraulic piston is movably nested in the hydraulic cylinder body;
the hydraulic cylinders comprise: a first front hydraulic cylinder, a second front hydraulic cylinder, a first rear hydraulic cylinder, and a second rear hydraulic cylinder; the hydraulic pipes comprise: a first hydraulic pipe and a second hydraulic cylinder pipe; the bogies are arranged at the front bottom and the rear bottom of the vehicle body of the rail vehicle, respectively; the first front hydraulic cylinder and the second front hydraulic cylinder are symmetrically installed at two ends of the steering crossbeam of the track change device at the front bottom of the vehicle body, and the first rear hydraulic cylinder and the second rear hydraulic cylinder are symmetrically installed at two ends of the steering crossbeam of the track change device at the rear bottom of the vehicle body; one end of the first hydraulic pipe is connected to a bottom of the first front hydraulic cylinder, the other end of the first hydraulic pipe is connected to a bottom of the second rear hydraulic cylinder; one end of the second hydraulic pipe is connected to a bottom of the second front hydraulic cylinder, the other end of the second hydraulic pipe is connected to a bottom of the first rear hydraulic cylinder; and
two sides of the slider of the steering part of the track change device at the front bottom of the vehicle body are in fixed connection with one end of the hydraulic piston of the first front hydraulic cylinder and one end of the hydraulic piston of the second front hydraulic cylinder, respectively; and two sides of the slider of the steering part of the track change device at the rear bottom of the vehicle body are in fixed connection with one end of the hydraulic piston of the first rear hydraulic cylinder and one end of the hydraulic piston of the second rear hydraulic cylinder, respectively.

45. The vehicle-mounted track change system according to claim 44, wherein each of the first front hydraulic cylinder, the second front hydraulic cylinder, the first rear hydraulic cylinder, and the second rear hydraulic cylinder is constructed to be two groups, respectively; each of two ends of both the first hydraulic pipe and the second hydraulic pipe is provided with two ports; the two ports at one end of the first hydraulic pipe are connected to bottoms of the two groups of first front hydraulic cylinders, respectively, and the two ports at the other end of the first hydraulic pipe are connected to bottoms of the two groups of second rear hydraulic cylinders; the two ports at one end of the second hydraulic pipe are connected with bottoms of the two groups of second front hydraulic cylinders, respectively, and the two ports at the other end of the second hydraulic pipe are connected with bottoms the two groups of the first rear hydraulic cylinder, respectively.
